(19) **Europäisches Patentamt / European Patent Office / Office européen des brevets**

(11) **EP 4 626 012 A1**

(12) **EUROPEAN PATENT APPLICATION**

(43) Date of publication:
01.10.2025  Bulletin 2025/40

(21) Application number: 25176817.2

(22) Date of filing: 30.11.2023

(51) International Patent Classification (IPC):
$H04N\ 23/698^{(2023.01)}$  $H04N\ 23/58^{(2023.01)}$
$G02B\ 13/06^{(2006.01)}$  $G06T\ 3/08^{(2024.01)}$
$H04N\ 9/31^{(2006.01)}$

(52) Cooperative Patent Classification (CPC):
H04N 23/698; G02B 13/06; H04N 9/3182;
H04N 9/3185; H04N 9/3194; H04N 23/58

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.12.2022  US 202263434309 P
12.06.2023  US 202318332855
12.06.2023  US 202318332874

(62) Document number(s) of the earlier application(s) in
accordance with Art. 76 EPC:
23837060.5 / 4 620 197

(71) Applicant: Sphere Entertainment Group, LLC
New York, NY 10121 (US)

(72) Inventors:
• DASILVA,, Deanan
Malibu, 90265 (US)
• GRAAE, Michael
New York, 11291 (US)

(74) Representative: Cross, James Peter Archibald
Maucher Jenkins
Seventh Floor Offices
Artillery House
11-19 Artillery Row
London SW1P 1RT (GB)

Remarks:
This application was filed on 18-06-2025 as a
divisional application to the application mentioned
under INID code 62.

(54) **CAPTURING IMAGES FOR A SPHERICAL VENUE**

(57)  Systems, methods, and apparatuses disclosed herein can include an exemplary image capture system to capture light that is related to an image within its field of view and/or an exemplary image projection system to transform the image for projection onto a three-dimensional media plane of a three-dimensional venue. The exemplary image capture system can direct rays of light that were captured by the exemplary image capture system onto an image sensor that is associated with the exemplary image capture system. As to be described in further detail below, the exemplary image capture system can focus these rays of light toward a periphery, or edge, of the image sensor. As a result, the three-dimensional venue can display the highest optical image quality for the image toward a bottom, or a springing, of the three-dimensional media plane. Moreover, the exemplary image capture system can be specifically manufactured to heterogeneously, for example, non-uniformly, distribute the rays of light that were captured by the exemplary image capture system onto the image sensor to further enhance the highest optical image quality for the image. As to be described in further detail below, the exemplary image projection system can project the image onto the three-dimensional media plane of the three-dimensional venue. As part of this projecting, the exemplary image projection system can mathematically transform two-dimensional coordinates of pixels of the image onto three-dimensional coordinates of the three-dimensional media plane to project the image onto the three-dimensional media plane. And as part of this projecting, the exemplary image projection system can statistically interpolate color information that is to be projected onto the three-dimensional media plane from the image.

**(Cont. next page)**

EP 4 626 012 A1

FIG. 1B

**Description**

CROSS-REFERENCE TO RELATED APPLICATIONS

The present application claims priority to United States Patent Appl. No. 18/332,855, filed June 12, 2023, and United States Patent Appl. No. 18/332,874, filed June 12, 2023, each of which claim the benefit of United States Provisional Patent Appl. No. 63/434,309, filed December 21, 2022, each of which is incorporated by reference herein in its entirety.

BACKGROUND

Content creators often use a conventional ultra-wide-angle lens, such as a conventional fisheye lens to provide an example, to capture conventional images that are to be displayed by a conventional three-dimensional media plane. The conventional fisheye lens represents one type of ultra-wide-angle lens that produces strong visual distortion, for example, a convex non-rectilinear appearance, which is intended to create one or more hemispherical images for display by the conventional three-dimensional media plane. Often times, a center of the conventional fisheye lens can be associated with a conventional prime viewing section that is situated at a top, or a crown, of the conventional three-dimensional media plane. Typically, the conventional prime viewing section can be characterized as having the highest optical image quality, for example, resolution, as compared to other viewing sections of the conventional three-dimensional media plane. The optical image quality of the one or more imagess that are captured by the conventional fisheye lens that are presented onto the conventional three-dimensional media plane lessens in optical image quality from the conventional prime viewing section toward a bottom, or a springing, of the conventional three-dimensional media plane with the lowest optical image quality being at the bottom of the conventional three-dimensional media plane.

The content creators often capture conventional images that are to be displayed by the conventional three-dimensional media plane during an event. Typically, the event can be characterized as including one or more performers that are situated toward the bottom of the conventional three-dimensional media plane. Often times, the conventional three-dimensional media plane can display the images as the one or more performers are performing. As such, an audience that is experiencing the event within the conventional venue typically focuses its field of view on the one or more performers toward the bottom of the conventional three-dimensional media plane. As a result, the audience would be viewing the images on the conventional three-dimensional media plane at their lowest optical image quality. The audience would be required to shift its field of view toward the conventional prime viewing section at the top of the conventional three-dimensional media plane, namely, look-up, to experience the images at their highest optical image quality which would cause the one or more performers to no longer be in its field of view.

BRIEF DESCRIPTION OF THE DRAWINGS

The present disclosure is described with reference to the accompanying drawings. In the drawings, like reference numbers indicate identical or functionally similar elements. Additionally, the left most digit(s) of a reference number identifies the drawing in which the reference number first appears. In the accompanying drawings:

FIG. 1A and FIG. 1B illustrate pictorial representations of an exemplary venue according to some exemplary embodiments of the present disclosure;

FIG. 2A illustrates a simplified block diagram of an exemplary image capture system according to some exemplary embodiments of the present disclosure;

FIG. 2B illustrates a flowchart of an exemplary operation of an exemplary camera system that that can be implemented within the exemplary image capture system according to some exemplary embodiments of the present disclosure;

FIG. 3A and FIG. 3B illustrate simplified block diagrams of an exemplary camera lens system that can be implemented within the exemplary camera system according to some exemplary embodiments of the present disclosure;

FIG. 4A and FIG. 4B illustrate simplified block diagrams of an exemplary camera lens housing that can be implemented within the exemplary camera system according to some exemplary embodiments of the present disclosure;

FIG. 5A and FIG. 5B illustrate simplified block diagrams of the exemplary camera system according to some exemplary embodiments of the present disclosure;

FIG. 6 illustrates a simplified block diagram of an exemplary image projection system according to some exemplary embodiments of the present disclosure;

FIG. 7 illustrates a flowchart of an exemplary kernel-based sampling technique that can be implemented within the exemplary projection system according to some exemplary embodiments of the present disclosure;

FIG. 8 and FIG. 9 illustrate the exemplary kernel-based sampling techniques that can be implemented within the exemplary projection system according to some exemplary embodiments of the present disclosure;

FIG. 10 illustrates a simplified block diagram of an exemplary computer system that can be implemented within the exemplary image capture system and/or the exemplary image projection system according to some exemplary embodiments of the present disclosure.

The present disclosure will now be described with reference to the accompanying drawings.

DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. Aspects of the present disclosure are best understood from the following detailed description when read with the accompanying figures. The present disclosure may repeat reference numerals and/or letters in the various examples. This repetition does not in itself dictate a relationship between the various embodiments and/or configurations discussed. It is noted that, in accordance with the standard practice in the industry, features are not drawn to scale. In fact, the dimensions of the features may be arbitrarily increased or reduced for clarity of discussion.

OVERVIEW

Systems, methods, and apparatuses disclosed herein can include an exemplary image capture system to capture light that is related to one or more images within its field of view and/or an exemplary image projection system to transform the one or more images for projection onto a three-dimensional media plane of a three-dimensional venue. The exemplary image capture system can direct rays of light that were captured by the exemplary image capture system onto an image sensor that is associated with the exemplary image capture system. As to be described in further detail below, the exemplary image capture system can focus these rays of light toward a periphery, or edge, of the image sensor. As a result, the three-dimensional venue can display the highest optical image quality for the one or more images toward a bottom, or a springing, of the three-dimensional media plane. Moreover, the exemplary image capture system can be specifically manufactured to heterogeneously, for example, non-uniformly, distribute the rays of light that were captured by the exemplary image capture system onto the image sensor to further enhance the highest optical image quality for the one or more images. As to be described in further detail below, the exemplary image projection system can project the one or more images onto the three-dimensional media plane of the three-dimensional venue. As part of this projecting, the exemplary image projection system can mathematically transform two-dimensional coordinates of pixels of the one or more images onto three-dimensional coordinates of the three-dimensional media plane to project the one or more images onto the three-dimensional media plane. And as part of this projecting, the exemplary image projection system can statistically interpolate color information that is to be projected onto the three-dimensional media plane from the one or more images.

PROJECTION OF IMAGES ONTO AN EXEMPLARY VENUE OF THE PRESENT DISCLOSURE

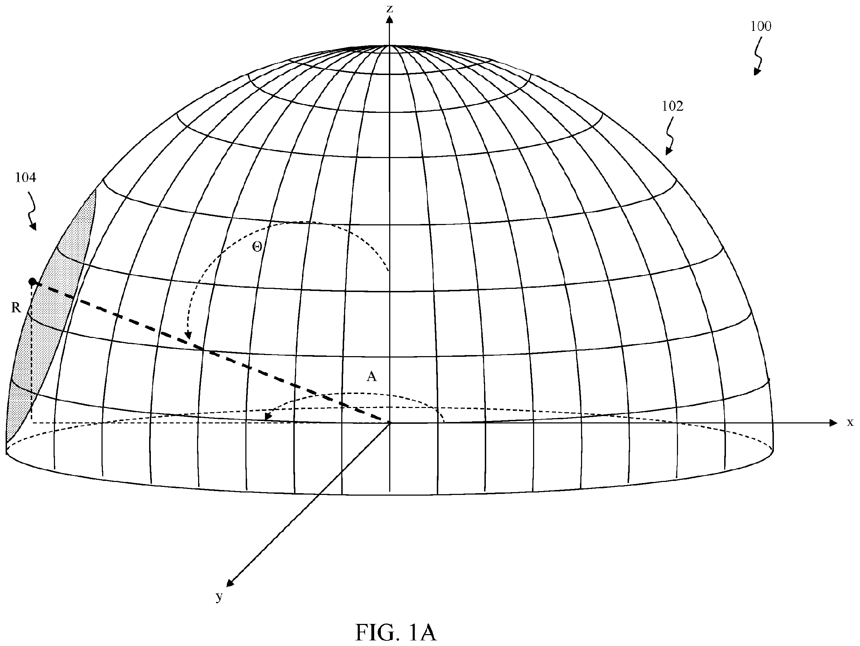

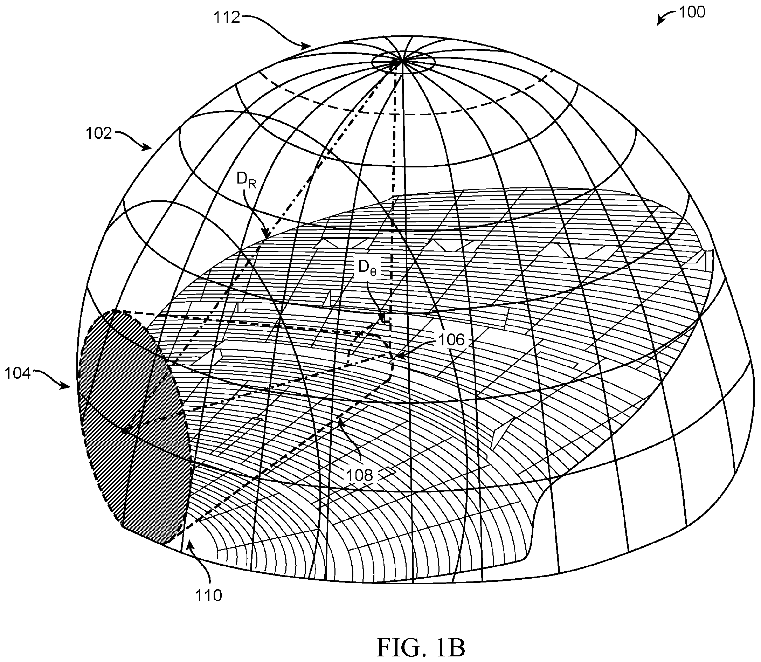

FIG. 1A and FIG. 1B illustrate pictorial representations of an exemplary venue according to some exemplary embodiments of the present disclosure. In the exemplary embodiment illustrated in FIG. 1A and FIG. 1B, a venue 100 represents a location for hosting an event. For example, the venue 100 can represent a music venue, for example, a music theater, a music club, and/or a concert hall, a sporting venue, for example, an arena, a convention center, and/or a stadium, and/or any other suitable venue that will be apparent to those skilled in the relevant (s) without departing the spirit and scope of the present disclosure. The event can include a musical event, a theatrical event, a sporting event, a motion picture, and/or any other suitable event that will be apparent to those skilled in the relevant (s) without departing the spirit and scope of the present disclosure. In the exemplary embodiment illustrated in FIG. 1A and FIG. 1B, the venue 100 can represent a three-dimensional structure, for example, a hemisphere structure, also referred to as a hemispherical dome, for hosting the event. In some embodiments, the venue 100 can include a three-dimensional media plane 102 for displaying one or more images that can be associated with the event that is spread across the interior, or intrados, of the venue 100. In some embodiments, the three-dimensional media plane 102 can include a series of rows and a series of columns of picture elements, also referred to as pixels, in three-dimensional space. In these embodiments, the pixels can be implemented using one or more light-emitting diode (LED) displays, one or more organic light-emitting diode (OLED) displays, and/or one or more quantum dots (QDs) displays to provide some examples. For example, the three-dimensional media plane 102 can include an approximate 16,000 by 16,000 resolution three-dimensional media plane in the three-dimensional space that wraps around the interior of the venue 100 to form an approximate 160,000 square foot visual display.

In some embodiments, the venue 100 can project the one or more images onto the three-dimensional media plane 102. In these embodiments, the one or more images can be projected onto the three-dimensional media plane 102 during the event to enhance the visual experience of the audience in viewing the event. As illustrated in FIG. 1A, the three-dimensional media plane 102 can include an audience prime viewing section 104 having the highest optical image quality that is situated along the interior, or intrados, of the three-dimensional media plane 102. In some embodiments, the audience prime viewing section 104 can be approximately situated at a haunch, which lies approximately halfway between the top and the base, of the three-dimensional media plane 102 with an approximate center of the audience prime viewing section 104 being denoted in a spherical coordinate system as (R, A, $\Theta$). The audience prime viewing section 104 can be characterized as having the highest optical image quality, for example, resolution, as compared to other viewing sections of the three-dimensional media plane 102. In some embodiments, the optical image quality of the one or more images projected onto the three-dimensional media plane 102 lessens from the highest optical image quality of the audience prime viewing section 104 toward another viewing section that is diametrically opposite to the audience prime viewing section 104 along the interior of the three-dimensional media plane 102. As to be described in further detail below, an exemplary image capture system can be utilized to capture the one or more images that, when projected onto the three-dimensional media plane 102, having the highest optical image quality situated within the audience prime viewing section 104. And as to be described in further detail below, an exemplary image projection system can be utilized to transform two-dimensional coordinates of the one or more images onto three-dimensional coordinates of the three-dimensional media plane to allow the one or more images to be projected onto the three-dimensional media plane.

In some embodiments, a center of a conventional prime viewing section 112 as described above can be denoted in a spherical coordinate system as ($r$, $\alpha$, $\theta$). In these embodiments, a distance $D_R$ between the center of the audience prime viewing section 104 and a center of conventional prime viewing section 112 can be denoted as:

$$D_R = \sqrt[2]{r^2 + R^2 - 2rR(\sin\theta \sin\Theta \cos(\alpha - A) + cos(\alpha)\,cos(A))}. \qquad (1)$$

And a difference $D_\theta$ between the polar angles between the center of the audience prime viewing section 104 and the conventional prime viewing section can be denoted as:

$$D_\theta = \Theta - \theta. \qquad (2)$$

In some embodiments, the center of the conventional prime viewing section 112 can be considered to be offset from the center of the audience prime viewing section 104 by the difference $D_\theta$. For example, the difference $D_\theta$ can be between approximately 30 degrees and approximately 90 degrees. In this example, the audience prime viewing section 104 can be considered to be offset from the conventional prime viewing section 112 between approximately 30 degrees and approximately 90 degrees.

As illustrated in FIG. 1B, the venue 100 can include one or more seating sections for seating an audience to experience the event. In some embodiments, the audience prime viewing section 104 can be specifically designated by, for example, the image capture system 200 as to be described in further detail below, to allow one or more audience members 106 from among the audience seated within the venue 100 to view the one or more images projected onto the three-dimensional media plane 102 at their highest optical image quality. In some embodiments, the one or more audience members 106 can include audience members from one or more rows of seats within the venue 100 and/or one or more sections of seats within the venue 100 to provide some examples. And as illustrated in FIG. 1B, the audience prime viewing section 104 can be specifically tailored to coincide with a field of view 108 of the one or more audience members 106 as the one or more audience members 106 are experiencing the event. As an example, the field of view 108 can correspond to fields of view of audience members within prime seating areas, for example, luxury suites, within the venue 100. In some embodiments, the one or more audience members 106 can be considered to experience the one or more images projected at their highest optical image quality. In some embodiments, the event, as described above, can be characterized as having one or more performers that are situated toward the bottom of the three-dimensional media plane 102. In these embodiments, the one or more performers can be on a stage 110 that is situated toward the bottom of the three-dimensional media plane 102. In these embodiments, the audience prime viewing section 104 can be situated behind the one or more performers to allow the one or more audience members 106 to simultaneously view the one or more performers and the one or more images at their highest optical image quality. In other words, the audience prime viewing section 104 can be situated within the field of view 108 of the one or more audience members 106 as the one or more audience members 106 are viewing the one or more performers.

## EXEMPLARY IMAGE CAPTURE SYSTEM FOR CAPTURING THE IMAGES

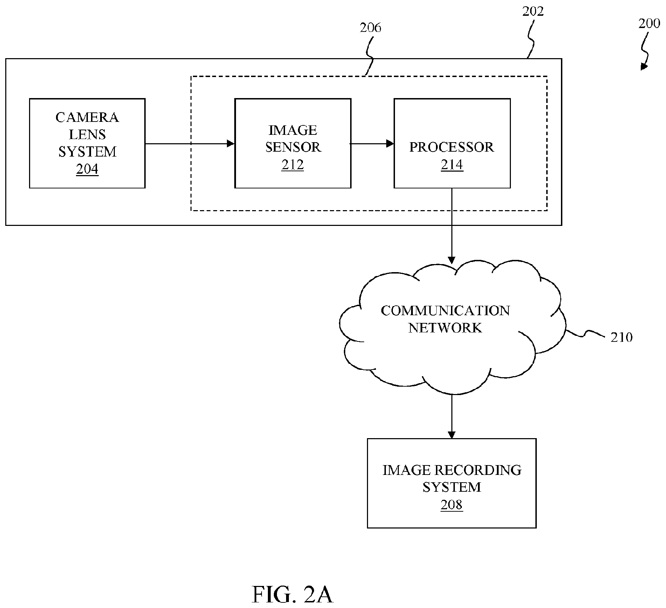

FIG. 2A illustrates a simplified block diagram of an exemplary image capture system according to some exemplary embodiments of the present disclosure. In the exemplary embodiment illustrated in FIG. 2A, an image capture system 200 captures light that is related to one or more images that can be projected onto a three-dimensional media plane of a venue, such as the three-dimensional media plane 102 of the venue 100 as described above in FIG. 1A and FIG. 1B. As to be described in further detail below, the image capture system 200 can be utilized to capture the one or more images that, when projected onto the three-dimensional media plane, having the highest optical image quality situated within an audience prime viewing section of the three-dimensional media plane, such as the audience prime viewing section 104 as described above in FIG. 1A and FIG. 1B. As to be described in further detail below, the image capture system 200 can direct rays of light that were captured by the image capture system 200 onto an image sensor that is associated with the image capture system 200. As to be described in further detail below, the image capture system 200 can focus these rays of light toward a periphery, or edge, of the image sensor. As a result, the three-dimensional venue can display the highest optical image quality for the one or more images within the having the highest optical image quality situated within the audience prime viewing section of the three-dimensional media. Moreover, the image capture system 200 can be specifically manufactured to heterogeneously, for example, non-uniformly, distribute the rays of light that were captured by the exemplary image capture system onto the image sensor to further enhance the highest optical image quality for the one or more images. As illustrated in FIG. 2A, the image capture system 200 can include a camera system 202 having a camera lens system 204 and a camera assembly 206 that can be communicatively coupled to an image recording system 208 via a communication network 210. Although the image capture system 200 is illustrated in FIG. 2A as including multiple, discrete devices, those skilled in the relevant art(s) will recognize that one of more of these devices can be combined without departing from the spirit and scope of the present disclosure. For example, the camera system 202 can include the camera lens system 204, the camera assembly 206, and/or the image recording system 208 as a single discrete device without the communication network 210 as will be apparent to those skilled in the relevant art(s) without departing from the spirit and scope of the present disclosure.

In the exemplary embodiment illustrated in FIG. 2A, the camera lens system 204 projects light that is related to one or more images, for example, a scene, within its field of view onto an image sensor 212 of the camera assembly 206 that is to be described in further detail below. In some embodiments, the camera lens system 204 can focus, for example, converge, the light that is captured onto the image sensor 212 to generate the one or more images for projection onto the three-dimensional media plane of the venue. For example, the camera lens system 204 can focus the light that is reflected from one or more physical objects within the scene onto the image sensor 212 to generate one or more images of the one or more physical objects for projection onto the three-dimensional media plane of the venue. In the exemplary embodiment illustrated in FIG. 2A, the camera lens system 204 can include a camera lens housing and a camera lens system. In some embodiments, the camera lens housing can be implemented to form a perspective-control lens, such as a shift lens or a tilt-shift lens to provide some examples. Referring to FIG. 1A and FIG. 1B above, the perspective-control lens can be utilized by the image capture system 200 to focus, for example, converge, the light that is captured by the image capture system 200 onto one or more sections of the image sensor 212 that are associated with the audience prime viewing section of the three-dimensional media plane. In some embodiments, the perspective-control lens can change the orientation or the position of the camera lens system, for example, tilt, shift, and/or rotate, with respect to the camera assembly 206 to designate the one or more sections of the image sensor 212. For example, the perspective-control lens can steer the orientation or the position of a center of the camera lens system, for example, a center of an ultra-wide-angle lens, such as a fisheye lens or a rectilinear lens, with respect to the image sensor 212. Generally, the ultra-wide-angle lens represents any suitable lens having a field of view between approximately one hundred (100) and approximately one-hundred eighty (180) degrees that will be recognized by those skilled in the relevant art(s) without departing from the spirit and scope of the present disclosure. In this example, the perspective-control lens can steer the orientation or the position of the center of the camera lens system to toward a periphery, for example, an edge, of the image sensor 212 to focus light that is captured by the center of the camera lens system toward the periphery of the image sensor 212. In some embodiments, the periphery, for example, the edge, of the image sensor 212 can be approximated as the outermost one-eighth to one-fourth of the surface area of the image sensor 212. As such, when the one or more images that are projected near the periphery of the image sensor 212 are projected onto the three-dimensional media plane as described above in FIG. 1A and FIG. 1B, the highest optical image quality of the one or more images can be situated along the interior of the three-dimensional media plane within the audience prime viewing section.

In some embodiments, the camera lens system can include a simple single lens of transparent material; however, more complicated compound lenses of transparent material, such as doublet lenses, triplet lenses, and/or achromatic lenses, are possible as will be apparent to those skilled in the relevant art(s) without departing from the spirit and scope of the present disclosure. In these embodiments, the transparent material can include glass, crystal, and/or plastic, such as acrylic to provide an example. In some embodiments, these complicated compound lenses can be configured and arranged to form an ultra-wide-angle lens, such as a fisheye lens that produces strong visual distortion intended to create one or more hemispherical images and/or a rectilinear lens with little or no barrel or pincushion distortion that yields one or more images where straight features, such as the edges of walls of buildings, appear with straight lines, as opposed to being curved as with the fisheye lens to provide some examples. In some embodiments, the ultra-wide-angle lens can be specifically manufactured to direct the light that is captured by the camera lens system to be heterogeneously, for example, non-uniformly, distributed onto the image sensor 212 about an approximate a center of the image sensor 212. In these embodiments, the angular distribution of the light can be characterized as being non-uniform across the image sensor 212 as compared to the conventional ultra-wide-angle lens as described above that projects light uniformly. For example, the camera lens system can focus the light onto the image sensor 212 to be more concentrated near the center of the image sensor 212 as compared to the periphery of the image sensor 212. In some embodiments, the camera lens system can concentrate the light near the center of the image sensor 212 to project more detail for the one or more images, for example, more detail of the scene, near the center of the image sensor 212. As such, when the camera lens system 204 includes the perspective-control lens that heterogeneously distributes the light that is captured by the perspective-control lens, the one or more images that are projected within the audience prime viewing section includes even more detail, and hence an even greater resolution, within the audience prime viewing section as compared to implementing the camera lens system 204 with only the perspective-control lens.

The camera assembly 206 captures the light that is focused onto the image sensor 212 by the camera lens system 204 to provide one or more digital image signals, also referred to as raw image data, that are associated with the one or more images. In some embodiments, the camera assembly 206 can reconstruct the one or more images from the one or more digital image signals. In the exemplary embodiment illustrated in FIG. 2A, the camera assembly 206 can include the image sensor 212 and a processor 214. Generally, the image sensor 212 converts the light, namely the photons, which is focused onto the image sensor 212 by the camera lens system 204 into electrical signals. In some embodiments, the image sensor 212 can convert the electrical signals from a representation in the analog signal domain to a representation in the digital signal domain to provide the one or more digital image signals that are be stored by the image recording system 208 as to be described in further detail below. In some embodiments, the image sensor 212 can include small picture elements, also referred to as pixels, which can include light sensitive elements, micro lenses, and/or micro electrical components. In some embodiments, the pixels can be configured and arranged as a series of rows and a series of columns to form an array of pixels, for example, a square array of pixels. In these embodiments, the image sensor 212 can include 18,000 rows of pixels and 18,000 columns of pixels to form an 18,000 by 18,000 square array of pixels. In some embodiments, the image sensor 212 can be implemented as a charge-coupled device (CCD) or an active-pixel sensor that can be fabricated in complementary metal-oxide-silicon (CMOS) and/or n-type metal-oxide-silicon (NMOS) technologies. In these embodiments, the image sensor 212 can be implemented as a color sensor that includes a color mask, such as a Bayer mask to provide an example, that absorbs undesired color wavelengths so that each pixel of the image sensor 212 is sensitive to a specific color wavelength and/or a monochromatic sensor without the color mask so that each pixel of the image sensor 212 is sensitive to all visible light wavelengths. In these embodiments, the one or more digital image signals can include color information, for example, luminance and/or chrominance components of YUV color model and/or red, green, and/or blue components of a RGB color model to provide some examples, of each pixel of the image sensor 212.

The processor 214 can provide the one or more digital image signals that are developed by the image sensor 212 to the image recording system 208. Alternatively, or in addition to, the processor 214 can reconstruct the one or more images from the one or more digital image signals and thereafter provide the one or more images to the image recording system 208. In these embodiments, the processor 214 can implement one or more digital image processing techniques, also referred to as digital picture processing techniques, to process the one or more digital image signals that are developed by the image sensor 212 to reconstruct the one or more images from the one or more digital image signals. In some embodiments, the one or more digital image processing techniques can include decoding, demosaicing, defective pixel removal, white balancing, noise reduction, color translation, tone reproduction, compression, removal of systematic noise, dark frame subtraction, optical correction, contrast manipulation, unsharp masking, and/or any other suitable well known digital image processing technique that will be apparent to those skilled in the relevant art(s) without departing from the spirit and scope of the present disclosure. In some embodiments, the processor 214 can format the one or more digital image signals and/or the one or more images for transmission to the image recording system 208 over the communication network 210. In some embodiments, the processor 214 can compress the one or more digital image signals and/or the one or more images using, for example, lossless compression techniques, such as Lempel-Ziv based lossless compression techniques, and/or lossy compression techniques, such as discrete cosine transform (DCT) based lossy compression techniques. In some embodiments, the processor 214 can include, or be coupled to, an electrical-to-optical converter to transform the one or more digital image signals from electrical signals to optical signals for transmission over a fiber optic network.

The image recording system 208 can store the one or more digital image signals and/or the one or more images provided by the processor 214. As to be described in further detail below, the one or more digital image signals and/or the one or more images can be further processed by an image projection system for projection onto the three-dimensional media plane of the venue plane in a substantially similar manner as described above in FIG. 1A and FIG. 1B. In some embodiments, the image recording system 208 can store the one or more digital image signals as raw camera image files having radiometric characteristics of the light captured by the image capture system. These radiometric characteristics can include color information, for example, luminance and/or chrominance components of YUV color model and/or red, green, and/or blue components of a RGB color model to provide some examples, of each pixel of the image sensor. Alternatively, or in addition to, the image recording system 208 can store the one or more images in any suitable well-known image file format, such as Joint Photographic Experts Group (JPEG) image file format, Exchangeable Image File Format (EXIF), Tagged Image File Format (TIFF), Graphics Interchange Format (GIF), bitmap image file (BMP) format, or Portable Network Graphics (PNG) image file format to provide some examples, that will be apparent to those skilled in the relevant art(s) without departing from the spirit and scope of the present disclosure. In some embodiments, the image recording system 208 can include a machine-readable medium to store the one or more digital image signals and/or the one or more images provided by the processor 214 in a form readable by a machine, such as a computing device to provide an example. In these embodiments, the machine-readable medium can include read only memory (ROM), random access memory (RAM), magnetic disk storage media, optical storage media, flash memory devices, among others. Alternately, or in addition to, the machine-readable medium can include a hard disk drive, for example, a solid-state driver, a floppy disk drive along with associated removable media, a CD-ROM drive, an optical drive, a flash memory, or removable media cartridges to persistently storage the one or more digital image signals by the camera assembly 206.

The communication network 210 communicatively couples the camera system 202 and the image recording system 208. The communication network 210 can implemented as a wireless communication network, a wireline communication network, and/or any combination thereof that will be apparent to those skilled in the relevant art(s) without departing from the spirit and scope of the present disclosure. In some embodiments, the communication network 210 can include a fiber optic network and/or a coaxial network that uses optical fiber and/or coaxial cable to deliver the one or more digital image signals and/or the one or more images from the camera system 202 to the image recording system 208. In some embodiments, the communication network 210 can include a hybrid fiber coaxial (HFC) network that combines optical fiber and coaxial cable to deliver the one or more digital image signals and/or the one or more images from the camera system 202 to the image recording system 208.

<u>EXEMPLARY CAMERA SYSTEM THAT CAN BE IMPLEMENTED WITHIN THE EXEMPLARY CAMERA SYSTEM</u>

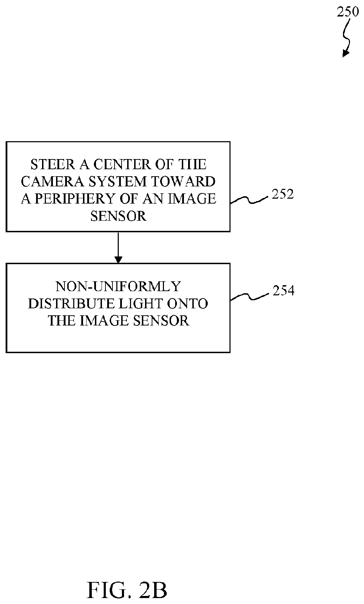

FIG. 2B illustrates a flowchart of an exemplary operation of an exemplary camera system that that can be implemented within the exemplary image capture system according to some exemplary embodiments of the present disclosure. The disclosure is not limited to this operational description. Rather, it will be apparent to ordinary persons skilled in the relevant art(s) that other operational control flows are within the scope and spirit of the present disclosure. The following discussion describes an exemplary operational control flow 250 for projecting light that is related to one or more images, for example, a scene, within its field of view onto an image sensor. The operational control flow 250 can be executed by a camera system having a camera lens system and a camera assembly, such as the camera system 202 having the camera lens system 204 and the camera assembly 206 as described above in FIG. 2A.

At operation 252, the operational control flow 250 can steer a center of the camera lens system toward a periphery of an image sensor of the camera assembly to direct light that is captured by the center of the camera lens system toward a periphery, or an edge, of the image sensor. In some embodiments, the operational control flow 250 can change the orientation or the position of the camera lens system, for example, tilt, shift, and/or rotate, with respect to the camera assembly. For example, the operational control flow 250 can steer the orientation or the position of a center of the camera lens system, for example, a center of an ultra-wide-angle lens, such as a fisheye lens or a rectilinear lens, with respect to the image sensor. In this example, the operational control flow 250 can steer the orientation or the position of the center of the camera lens system to toward a periphery, for example, an edge, of the image sensor to focus light that is captured by the center of the camera lens system toward the periphery of the image sensor. In some embodiments, the operational control flow 250 can focus light that is captured from, for example, the one or more images, toward the periphery of the image sensor.

At operation 254, the operational control flow 250 can focus light that is captured by the camera lens system to be non-uniformly distributed onto the image sensor from operation 252 about the periphery of the image sensor. In some embodiments, the operational control flow 250 can direct the light that is captured by the camera lens system to be heterogeneously, for example, non-uniformly, distributed onto the image sensor from operation 252 about an approximate a center of the image sensor. In these embodiments, the angular distribution of the light can be characterized as being non-uniform across the image sensor from operation 252 as compared to the conventional ultra-wide-angle lens as described above that projects light uniformly. For example, the operational control flow 250 can focus the light onto the image sensor from operation 252 to be more concentrated near the center of the image sensor as compared to the periphery of the image sensor. In some embodiments, the operational control flow 250 can concentrate the light near the center of the image sensor to project more detail for the image, for example, more detail of the scene, near the center of the image sensor.

EXEMPLARY CAMERA LENS SYSTEM THAT CAN BE IMPLEMENTED WITHIN THE EXEMPLARY CAMERA SYSTEM

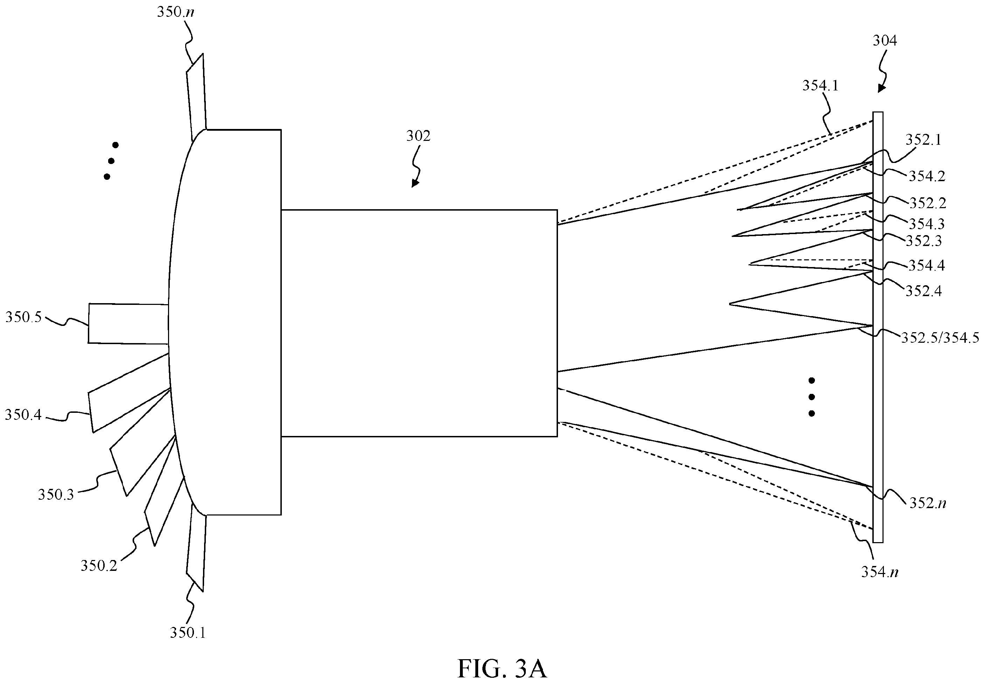

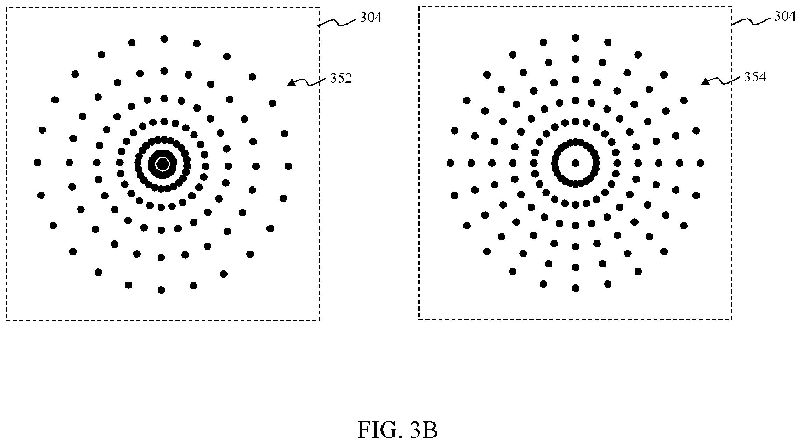

FIG. 3A and FIG. 3B illustrate simplified block diagrams of an exemplary camera lens system that can be implemented within the exemplary camera system according to some exemplary embodiments of the present disclosure. In the exemplary embodiment illustrated in FIG. 3A, a camera lens system 302 projects light that is related to one or more images, for example, a scene, within its field of view toward onto an image sensor 304. As to be described in further detail below, the camera lens system 302 can direct the light toward the image sensor 304 to provide a heterogeneous, for example, non-uniform, distribution of the light onto the image sensor 304. The camera lens system 302 and the image sensor 304 can represent exemplary embodiments of the camera lens system of the camera lens system 204 and the image sensor 212, respectively, as described above in FIG. 2A.

The camera lens system 302 is to be described in further detail below in terms of an exemplary ray tracing of rays of light 350.1 through 350.n onto the image sensor 304. However, it should be noted that the exemplary ray tracing as illustrated in FIG. 3A is for illustrative purposes only. Those skilled in the relevant art(s) will recognize that the rays of light 350.1 and 350.n can differ from those illustrated in FIG. 3A without departing from the spirit and scope of the present disclosure. As illustrated in FIG. 3A, the camera lens system 302 can capture the rays of light 350.1 through 350.n that are within its field of view. In some embodiments, the rays of light 350.1 through 350.n can be reflected from one or more physical objects within, for example, the scene that are within its field of view. In the exemplary embodiment illustrated in FIG. 3A, the rays of light 350.1 through 350.n can be characterized as having different incident angles in relation to the camera lens system 302. In some embodiments, rays of light nearest a periphery, or an edge, of the field of view of the camera lens system 302 from among the rays of light 350.1 through 350.n, for example, the ray of light 350.1 and the ray of light 350.n, can be characterized as having the largest incident angles, for example, approximately one-half the field of view of the camera lens system 302. For example, the camera lens system 302 can have a field of view of one hundred sixty (160) degrees. In this example, the ray of light 350.1 and the ray of light 350.n as illustrated in FIG. 3A can be characterized as having incident angles of approximately eighty (80) degrees in relation to the camera lens system 302. In some embodiments, a median ray of light from among the rays of light 350.1 through 350.n, for example, the ray of light 350.5, can be characterized as having the smallest incident angle, for example, approximately zero (0) degrees. In these embodiments, the median ray of light can be characterized as propagating parallel to the camera lens system 302.

After capturing the rays of light 350.1 through 350.n, the camera lens system 302 can focus, for example, converge, the rays of light 350.1 through 350.n using a simple single lens of transparent material; however, more complicated compound lenses of transparent material, such as doublet lenses, triplet lenses, and/or achromatic lenses, are possible as will be apparent to those skilled in the relevant art(s) without departing from the spirit and scope of the present disclosure. In these embodiments, the transparent material can include glass, crystal, and/or plastic, such as acrylic to provide an example. In some embodiments, these complicated compound lenses can be configured and arranged to form an ultra-wide-angle lens, such as a fisheye lens that produces strong visual distortion intended to create one or more hemispherical images and/or a rectilinear lens with little or no barrel or pincushion distortion that yields one or more images where straight features, such as the edges of walls of buildings, appear with straight lines, as opposed to being curved as with the fisheye lens to provide some examples.

After being focused by the camera lens system 302, the rays of light 350.1 through 350.n can exit the camera lens system 302 to provide rays of light 352.1 through 352.n toward the image sensor 304. In the exemplary embodiment illustrated in FIG. 3A, the camera lens system 302 can angularly distribute the rays of light 352.1 through 352.n heterogeneously, for example, non-uniformly, across the image sensor 304. For example, the angular distribution of the rays of light 352.1 through 352.n can be characterized as being non-uniform across the image sensor 304 as compared to conventional rays of light 354.1 through 354.n that exit a conventional ultra-wide-angle lens, for example, the conventional fisheye lens as described above. In this example, the conventional rays of light 354.1 through 354.n can be characterized as being uniformly distributed across the image sensor 304. As illustrated in FIG. 3B, the conventional rays of light 354.1 through 354.n, denoted simply as conventional rays of light 354 for convenience, can be uniformly distributed about a central ray of light that corresponds to the median ray of light from among the rays of light 350.1 through 350.n, for example, the ray of light 350.5. In some embodiments, the conventional rays of light 354 can be considered to be uniformly, or equally, spaced apart from one another about the central ray of light on the image sensor 304. And as illustrated in FIG. 3B, the rays of light 352.1 through 352.n, denoted simply as rays of light 352 for convenience, can be non-uniformly distributed about the central ray of light that corresponds to the median ray of light from among the rays of light 350.1 through *350.n,* for example, the ray of light 350.5. In some embodiments, the rays of light 352.1 through 352.n can be considered to be non-uniformly, or differently, spaced apart from one another about the central ray of light on the image sensor 304. In these embodiments, the rays of light 352 can be more concentrated near a center of the image sensor 304 as compared to a periphery, or an edge, of the image sensor 304. In these embodiments, the pixels of the image sensor 304 can be distributed among the image sensor 304 to provide a first density of pixels, for example, seventy (70) pixels per degree (PPD), at a center of the image sensor 304 that tapers to a second density of pixels, for example, one hundred forty (140) pixels per degree (PPD), near the periphery of the image sensor 304. In these embodiments, the pixels of the image sensor 304 can linearly, for example, uniformly, and/or non-linearly, for example, non-uniformly, taper from the first density of pixels to the second first density of pixels.

In some embodiments, the image sensor 304 can be characterized as having a lower angular resolution at the center as compared to the periphery of the image sensor 304 since the image sensor 304 captures more rays of light from among the rays of light 352.1 through 352.n near the center of the image sensor 304 as illustrated in FIG. 3A and FIG. 3B. In these embodiments, the angular resolution is related to the minimum angular distance between objects that the image sensor 304 assembly can discern resolvable detail. Typically, a lower angular resolution indicates that the image sensor 304 can discern more detail of the one or more images, for example, the scene, within its field of view as compared to a higher angular resolution. As such, a lower angular resolution is often associated with a higher optical image quality, for example, magnification, than a higher angular resolution. As illustrated in FIG. 3B, the lowest angular resolution, and hence, the highest optical image quality is near the center of the image sensor 304 where the concentration of the rays of light 352.1 through 352.n is at its largest and the highest angular resolution, and hence, the lowest optical image quality is near the periphery of the image sensor 304 where the concentration of the rays of light 352.1 through 352.n is at its smallest.

### EXEMPLARY CAMERA LENS HOUSING THAT CAN BE IMPLEMENTED WITHIN THE EXEMPLARY CAMERA SYSTEM

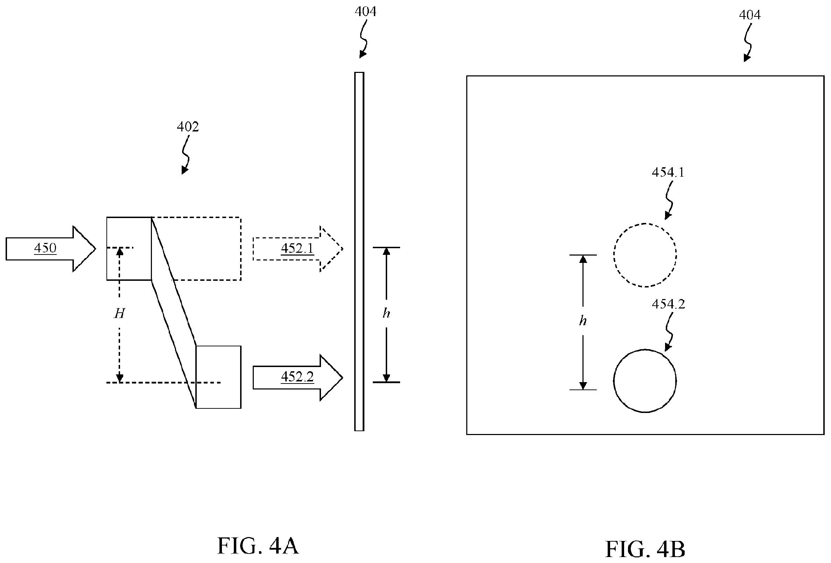

FIG. 4A and FIG. 4B illustrate simplified block diagrams of an exemplary camera lens housing that can be implemented within the exemplary camera system according to some exemplary embodiments of the present disclosure. In the exemplary embodiment illustrated in FIG. 4A and FIG. 4B, a camera lens housing 402 projects light onto an image sensor 404. As to be described in further detail below, the camera lens housing 402 can change an orientation or a position of the camera lens housing 402, for example, tilt, shift, and/or rotate, with respect to the image sensor 404. As such, the camera lens housing 402 can steer the orientation or the position of a center of the camera lens housing 402 to focus light that is captured by the camera lens housing 402 toward a periphery, for example, an edge, of the image sensor 404. The camera lens housing 402 and the image sensor 404 can represent exemplary embodiments of the camera lens housing of the camera lens system 204 and the image sensor 212, respectively, as described above in FIG. 2A.

In the exemplary embodiment illustrated in FIG. 4A, the camera lens housing 402 can be implemented to form a perspective-control lens, such as a shift lens or a tilt-shift lens to provide some examples. As illustrated in FIG. 4A, the camera lens housing 402 can capture rays of light 450 that are within its field of view. In some embodiments, the rays of light 450 can be reflected from one or more physical objects within, for example, a scene. After capturing the rays of light 450, the camera lens housing 402 can focus, for example, converge, the rays of light 450 using a simple single lens of transparent material; however, more complicated compound lenses of transparent material, such as doublet lenses, triplet lenses, and/or achromatic lenses, are possible as will be apparent to those skilled in the relevant art(s) without departing from the spirit and scope of the present disclosure. In these embodiments, the transparent material can include glass, crystal, and/or plastic, such as acrylic to provide an example. In some embodiments, these complicated compound lenses can be configured and arranged to form an ultra-wide-angle lens, such as a fisheye lens that produces strong visual distortion intended to create one or more hemispherical images and/or a rectilinear lens with little or no barrel or pincushion distortion that yields one or more images where straight features, such as the edges of walls of buildings, appear with straight lines, as opposed to being curved as with the fisheye lens to provide some examples.

After being focused by the camera lens housing 402, the rays of light 450 can exit the camera lens housing 402 to provide rays of light 452.1 and/or rays of light 452.2 toward the image sensor 404. In some embodiments, the camera lens housing 402 can focus rays of the light 450 that are captured from the one or more images, for example, the scene, to provide the rays of light 452.1 that correspond to the one or more images to the image sensor 404. In some embodiments, the camera lens housing 402 can focus the rays of light 452.1 onto a center of the image sensor 404. As illustrated in FIG. 4B, the center of the camera lens housing 402 can be configured and arranged to be orientated or positioned with respect to the image sensor 404 to project a center 454.1 of the simple single lens and/or the compound lenses of the camera lens housing 402 onto a center of the image sensor 404. In some embodiments, the rays of light 452.1 that are projected onto the image sensor 404 can be reconstructed into the one or more images that can be projected onto a three-dimensional media plane, such as the three-dimensional media plane 102 to provide an example, in a substantially similar manner as described above in FIG. 1A and FIG. 1B. In these embodiments, the one or more images can be projected onto the three-dimensional media plane can be characterized as having its highest optical image quality, for example, resolution, at the top of the three-dimensional media plane, for example, within the conventional prime viewing section 112 as described above.

Alternatively, or in addition to, the camera lens housing 402 can focus rays of the light 450 that are captured from, for example, a scene, to provide the rays of light 452.2 that corresponds to the one or more images to the image sensor 404. In some embodiments, the camera lens housing 402 can focus the rays of light 452.2 toward a periphery, for example, an edge, of the image sensor 404. In these embodiments, the camera lens housing 402 can change the orientation or the position of the camera lens housing 402, for example, tilt, shift, and/or rotate, with respect to the image sensor 404. For example, the camera lens housing 402 can steer the orientation or the position of a center of the camera lens housing 402 with respect to the image sensor 404. In this example, the camera lens housing 402 can steer the orientation or the position of the center of the camera lens housing 402 to direct the rays of light 452.2 toward a periphery, for example, an edge, of the image sensor 404. As illustrated in FIG. 4A, the camera lens housing 402 can steer the orientation or the position of the center of the camera lens housing 402 by a height $H$ to shift the projection of the rays of light 452.2 onto the image sensor 404 by a height $h$. In some embodiments, a ratio between the height H and the height h is approximately one to one. In these embodiments, the orientation or the position of the center of the camera lens housing 402 can be steered relative to an image circle projected by the camera lens housing 402 in relation to the coverage of the image sensor 404. For example, if the image circle projected by the camera lens housing 402 is ten (10) mm greater than the height of the image sensor 404, then the steering that can be acheieved is five (5) mm. In this example, after the five (5) mm, any additional sterring of the orientation or the position of the center of the camera lens housing 402 is often not beneficial.

As illustrated in FIG. 4B, a center of the camera lens housing 402 can be configured and arranged to be orientated or positioned with respect to the image sensor 404 to shift a center 454.2 of the simple single lens and/or the compound lenses of the camera lens housing 402 as compared to the center 454.1 by the height $h$ on the image sensor 404. In some embodiments, the rays of light 452.2 that are projected onto the image sensor 404 can be reconstructed into the one or more images that can be projected onto a three-dimensional media plane, such as the three-dimensional media plane 102 to provide an example, in a substantially similar manner as described above in FIG. 1A and FIG. 1B. In these embodiments, the one or more images can be projected onto the three-dimensional media plane can be characterized as having its highest optical image quality, for example, resolution, situated along the interior of the three-dimensional media plane, for example, within the audience prime viewing section 104 as described above in FIG. 1A and 2B. In some embodiments, the audience prime viewing section 104 as described above in FIG. 1A and 2B can be characterized as being shifted along the polar angle with respect to the conventional prime viewing section 112 as described above. In these embodiments, an angular difference, or shift, between the conventional prime viewing section 112 and the audience prime viewing section 104 along the polar angle can be represented as:

$$Shift_{\theta} = \frac{\text{height } h}{l_{SENSOR}} * fov, \qquad (3)$$

wherein $shift_{\theta}$ represents the angular difference, or shift, between the conventional prime viewing section 112 and the audience prime viewing section 104 along the polar angle $\theta$, height $h$ represents the height $h$ expressed in millimeters (mm) as described above in FIG. 4A and FIG. 4B, $l_{sensor}$ represents a vertical dimension or a horizontal dimension of the image sensor 404 expressed in millimeters (mm) assuming a square image sensor, and $fov$ represents a field of view of the simple single lens and/or the compound lenses of the camera lens housing 402. For example, a shift of fifteen (15) millimeters (mm) between the center of the camera lens housing 402 and the center of the image sensor 404 provides a thirty-two (32) degree shift between the conventional prime viewing section 112 and the audience prime viewing section 104 along the polar angle $\theta$ for a square image sensor of 75 millimeters (mm) and a field of view of one hundred sixty (160) degrees for the field of view of the simple single lens and/or the compound lenses of the camera lens housing 402 of the camera lens housing 402.

EXEMPLARY CAMERA SYSTEM

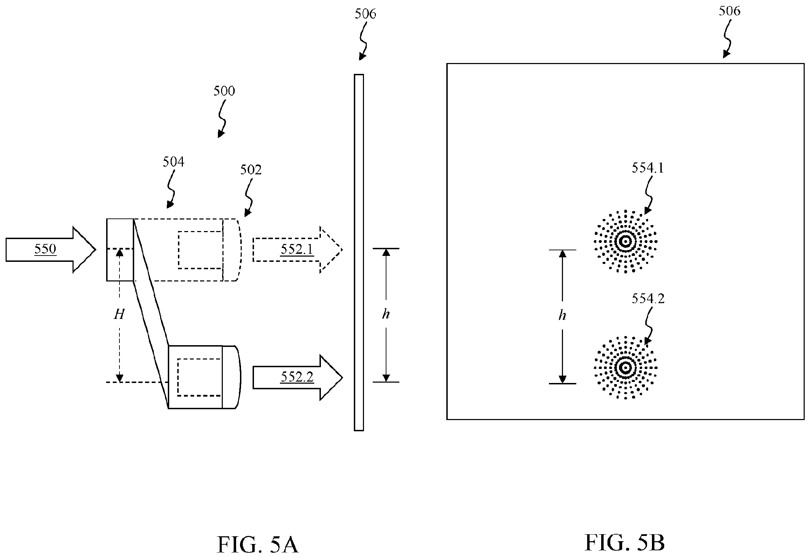

FIG. 5A and FIG. 5B illustrate simplified block diagrams of the exemplary camera system according to some exemplary embodiments of the present disclosure. In the exemplary embodiment illustrated in FIG. 5A, a camera lens system 500 can project light that is captured by the camera lens system 500 onto an image sensor 506. As illustrated in FIG. 5A, the camera lens system 500 can include a camera lens system 502 to direct the light that is captured from, for example, a scene, onto the image sensor 506. The camera lens system 502 can direct the light toward the image sensor 506 to provide a heterogeneous, for example, non-uniform, distribution of the light onto the image sensor 506 in a substantially similar manner as the camera lens system 302 as described above in FIG. 3A and FIG. 3B. As illustrated in FIG. 5A, the camera lens system 500 can include a camera lens housing 504 to direct the light that is captured by the camera lens system 502 onto the image sensor 506. The camera lens housing 504 can change an orientation or a position of the camera lens system 502, for example, tilt, shift, and/or rotate, with respect to the image sensor 506 in a substantially similar manner as the camera lens housing 402 as described above in FIG. 4A and FIG. 4B. The camera lens system 502 can represent an exemplary embodiment of the camera lens system 302 as described above in FIG. 3A and FIG. 3B and/or the camera lens housing 504 can represent an exemplary embodiment of the camera lens housing 402 as described above in FIG. 4A and FIG. 4B.

As illustrated in FIG. 5A, the camera lens system 502 can capture rays of light 550 that are within its field of view in a substantially similar manner as the camera lens system 302 as described above in FIG. 3A and FIG. 3B. After being focused by the camera lens system 502, the rays of light 550 can exit the camera lens system 502 to provide rays of light 552.1 toward the image sensor 506. In the exemplary embodiment illustrated in FIG. 5A, the camera lens system 502 can angularly distribute the rays of light 552.1 heterogeneously, for example, non-uniformly, across the image sensor 506 in a substantially similar manner as the camera lens system 302 as described above in FIG. 3A and FIG. 3B. And as illustrated in FIG. 5B, a center of the camera lens housing 504 can be configured and arranged to be orientated or positioned with respect to the image sensor 506 to project a center 554.1 of the camera lens system 502 onto a center of the image sensor 506 a substantially similar manner as described above in FIG. 4A and FIG. 4B. As further illustrated in FIG. 5B, the camera lens system 502 can angularly distribute the rays of light 552.1 heterogeneously, for example, non-uniformly, about a center of the image sensor 506 in a substantially similar manner as the camera lens system 302 as described above in FIG. 3A and FIG. 3B.

Alternatively, or in addition to, the camera lens housing 504 can focus rays of the light 550 that are captured from, for example, a scene, to provide the rays of light 552.2 that corresponds to the one or more images to the image sensor 506. In the exemplary embodiment illustrated in FIG. 5A, the camera lens housing 504 can change the orientation or the position of the camera lens system 502, for example, tilt, shift, and/or rotate, with respect to the image sensor 506 in a substantially similar manner as the camera lens housing 402 as described above in FIG. 4A and FIG. 4B. For example, the camera lens housing 504 can steer the orientation or the position of a center of the camera lens system 502 with respect to the image sensor 506. In this example, the camera lens housing 504 can steer the orientation or the position of the center of the camera lens system 502 to direct the rays of light 452.2 toward a periphery, for example, an edge, of the image sensor 506 in a substantially similar manner as described above in FIG. 4A and FIG. 4B. As illustrated in FIG. 4B, a center of the camera lens housing 504 can be configured and arranged to be orientated or positioned with respect to the image sensor 506 to shift a center 554.2 of the camera lens system 502 as compared to the center 554.1 by the height $h$ on the image sensor 506 in a substantially similar manner as the camera lens system 402 as described above in FIG. 4A and FIG. 4B. As further illustrated in FIG. 5B, the camera lens system 502 can be specifically manufactured to direct the rays of light 552.2 to be heterogeneously, for example, non-uniformly, distributed onto the image sensor 506 about the periphery of the image sensor 506. In some embodiments, the camera lens system 502 can angularly distribute the rays of light 552.2 heterogeneously, for example, non-uniformly, toward the periphery of the image sensor 506 in a substantially similar manner as described above in FIG. 3A and FIG. 3B. For example, the camera lens system 502 can focus the rays of light 552.2 onto the image sensor 506 to be more concentrated near the periphery of the image sensor 502 as compared to a center of the image sensor 506. In some embodiments, the camera lens system 502 can concentrate the light near the periphery of the image sensor 502 to project more detail for the one or more images, for example, more detail of the scene, near the periphery of the image sensor 502. In these embodiments, the camera lens system 502 can be concentrate the light to be a first density of pixels, for example, seventy (70) pixels per degree (PPD), near the periphery of the image sensor 506 that tapers to a second density of pixels, for example, one hundred forty (140) pixels per degree (PPD), at a center of the image sensor 506. In these embodiments, the pixels of the image sensor 506 can linearly, for example, uniformly, and/or non-linearly, for example, non-uniformly, taper from the first density of pixels to the second density of pixels.

## EXEMPLARY IMAGE PROJECTION SYSTEM FOR PROJECTING THE CAPTURED IMAGES ONTO THE EXEMPLARY VENUE

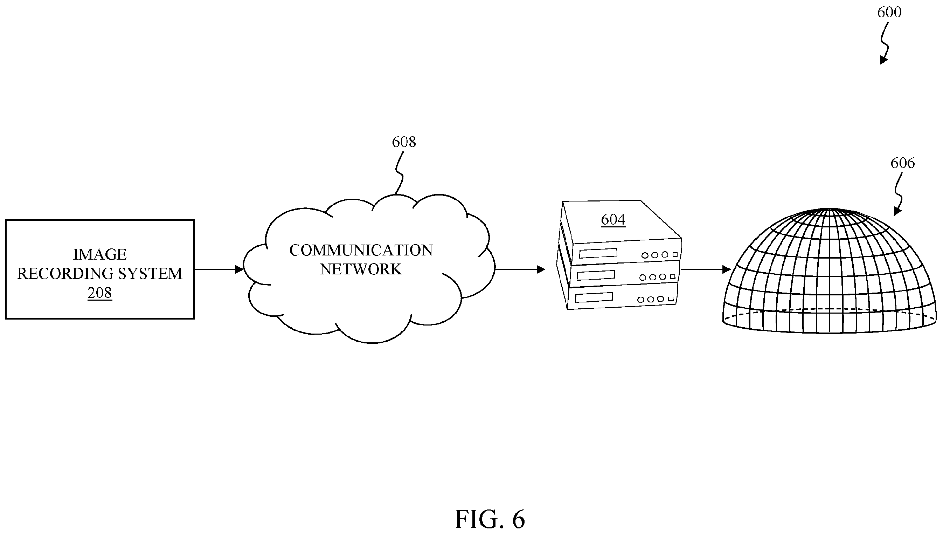

FIG. 6 illustrates a simplified block diagram of an exemplary image projection system according to some exemplary embodiments of the present disclosure. As described above, an image capture system, such as the image capture system 200 as described above in FIG. 2A, can capture one or more images that can be projected onto a three-dimensional media plane of a venue, such as the three-dimensional media plane 102 of the venue 100 as described above in FIG. 1A and FIG. 1B. In the exemplary embodiment illustrated in FIG. 6, an image projection system 600 can transform the one or more images from two-dimensions to three-dimensions for projection onto the three-dimensional media plane. As to be described in further detail below, the image projection system 600 can utilize a kernel-based sampling technique to project one or more picture elements, also referred to as pixels, of the three-dimensional media plane onto one or more corresponding two-dimensional points on the one or more images. In these embodiments, the kernel-based sampling technique thereafter weights and accumulates color information of one or more pixels from the one or more images that are nearby the one or more corresponding two-dimensional points on the one or more images to interpolate color information, for example, luminance and/or chrominance components of YUV color model and/or red, green, and/or blue components of a RGB color model to provide some examples, of the pixels of the three-dimensional media plane. As illustrated in FIG. 6, the image projection system 600 can include the image recording system 208 that can be communicatively coupled to an image processing server 604 and a venue 606 via a communication network 608. Although the image projection system 600 is illustrated in FIG. 6 as including multiple, discrete devices, those skilled in the relevant art(s) will recognize that one of more of these devices can be combined without departing from the spirit and scope of the present disclosure. For example, the image recording system 208 and the image processing server 604 can be combined into a single discrete device without the communication network 608 as will be apparent to those skilled in the relevant art(s) without departing from the spirit and scope of the present disclosure.

As described above, the image recording system 208 can store the one or more digital image signals and/or the one or more images provided by an image capture system, such as the image capture system 200 as described above in FIG. 2A. As to be described in further detail below in FIG. 6, the one or more digital image signals and/or the one or more images can be further processed by the image processing server 604 for projection onto a three-dimensional media plane, such as a three-dimensional media plane of the venue 606 to provide an example, in a substantially similar manner as described above in FIG. 1A and FIG. 1B.

The image processing server 604 includes one or more computer systems, an exemplary embodiment of which is to be described in further detail below, to retrieve the one or more images stored in the image recording system 208. Alternatively, or in addition to, the image processing server 604 can reconstruct the one or more images from the one or more digital image signals stored in the image recording system 208. In some embodiments, the image processing server 604 can implement one or more digital image processing techniques, also referred to as digital picture processing techniques, to process the one or more digital image signals that are stored in the image recording system 208 to reconstruct the one or more images from the one or more digital image signals. In some embodiments, the one or more digital image processing techniques can include decoding, demosaicing, defective pixel removal, white balancing, noise reduction, color translation, tone reproduction, compression, removal of systematic noise, dark frame subtraction, optical correction, contrast manipulation, unsharp masking, and/or any other suitable well known digital image processing technique that will be apparent to those skilled in the relevant art(s) without departing from the spirit and scope of the present disclosure.

After retrieving the one or more images and/or reconstructing the one or more images from the one or more digital image signals, the image processing server 604 can mathematically transform two-dimensional coordinates of the one or more images into three-dimensional coordinates of the venue 606, which is to be described in further detail below, to enable the one or more images to be projected onto the venue 606. In the exemplary embodiment illustrated in FIG. 6, the image processing server 604 can utilize a kernel-based sampling technique to mathematically transform two-dimensional coordinates of the one or more images into the three-dimensional coordinates of the venue 606. In some embodiments, the kernel-based sampling technique projects the three-dimensional coordinates of the pixels of the venue 606 onto a two-dimensional image space of the one or more images to effectively transform the three-dimensional coordinates of the venue 606 into two-dimensional coordinates of two-dimensional points that are projected onto the one or more images. In these embodiments, the kernel-based sampling technique can covert the three-dimensional coordinates of the venue 606 onto the two-dimensional image space of the one or more images. This conversion can spatially orient the three-dimensional coordinates of the venue 606 with the two-dimensional image space of the one or more images. For example, the kernel-based sampling technique can spatially orient a topside of the venue 606 with a topside of the two-dimensional image space of the one or more images.

After mathematically transform two-dimensional coordinates of the one or more images, the kernel-based sampling technique statistically interpolates color information, for example, luminance and/or chrominance components of YUV color model and/or red, green, and/or blue components of a RGB color model to provide some examples, of the pixels of the venue 606 from the one or more images. In some embodiments, the kernel-based sampling technique can statistically interpolate the color information of the pixels of the venue 606 based upon color information of pixels of the one or more images. In these embodiments, the kernel-based sampling technique can statistically interpolate the color information of the pixels of the venue 606 by weighting and accumulating the color information of the pixels of the one or more images that are nearby the two-dimensional points that are projected on the one or more images.

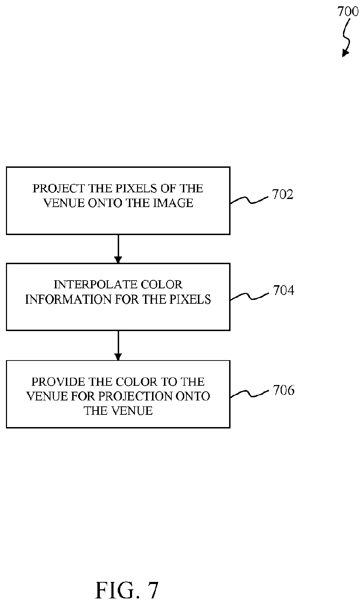

After interpolating the color information of the pixels of the venue 606, the image processing server 604 can provide the color information to the venue 606 to project the image onto the venue 606. In some embodiments, the image processing server 604 can generate quadruples for the pixels of the venue 606 that include the three-dimensional coordinates of the pixels of the venue 606 and the color information for the pixels of the venue 606 that has been statistically interpolated from the one or more images. In the exemplary embodiment illustrated in FIG. 6, the venue 606 can represent a three-dimensional structure, for example, a hemisphere structure, also referred to as a hemispherical dome. In some embodiments, the hemisphere structure can include one or more visual displays, often referred to as a three-dimensional media plane, that are spread across the interior, or intrados, of the hemisphere structure. In these embodiments, the one or more visual displays can include a series of rows and a series of columns of picture elements, also referred to as pixels, that form a three-dimensional media plane. In these embodiments, the pixels can be implemented using one or more light-emitting diode (LED) displays, one or more organic light-emitting diode (OLED) displays, and/or one or more quantum dots (QDs) displays to provide some examples. For example, the three-dimensional media plane can include a 19,000 by 13,500 LED visual display that wraps around the interior of the three-dimensional structure to form an approximate 160,000 square foot visual display. In some embodiments, the venue 600 can illuminate the pixels of the venue 606 in accordance with the color information to project the one or more images onto the three-dimensional media plane, for example, during the event. In these embodiments, the one or more images can be projected onto the three-dimensional media plane during the event to enhance the visual experience of the audience in viewing the event. In the exemplary embodiment illustrated in FIG 7, the three-dimensional media plane can include an audience prime viewing section, such as the audience prime viewing section 104 as described above in FIG. 1A and FIG. 1B, having the highest optical image quality that is situated along the interior, or intrados, of the three-dimensional media plane. In some embodiments, the audience prime viewing section can be considered to be a hemisphere structure that is approximately situated at a haunch, which lies approximately halfway between the top and the base, of the three-dimensional media plane in a substantially similar manner as the audience prime viewing section 104 as illustrated in FIG. 1A and FIG. 1B. The audience prime viewing section can be characterized as having the highest optical image quality, for example, resolution, as compared to other viewing sections of the three-dimensional media plane in a substantially similar manner as the audience prime viewing section 104 as illustrated in FIG. 1A and FIG. 1B. In some embodiments, the optical image quality of the one or more images lessens from the highest optical image quality of the audience prime viewing section toward another viewing section that is diametrically opposite to the audience prime viewing section along the interior of the three-dimensional media plane in a substantially similar manner as the audience prime viewing section 104 as illustrated in FIG. 1A and FIG. 1B.

EXEMPLARY KERNEL-BASED SAMPLING TECHNIQUES THAT CAN BE IMPLEMENTED WITHIN THE EXEMPLARY IMAGE PROJECTION SYSTEM

FIG. 7 illustrates a flowchart of an exemplary kernel-based sampling technique that can be implemented within the exemplary image projection system according to some exemplary embodiments of the present disclosure. The disclosure is not limited to this operational description. Rather, it will be apparent to ordinary persons skilled in the relevant art(s) that other operational control flows are within the scope and spirit of the present disclosure. The following discussion describes an exemplary operational control flow 700 for mathematically transforming two-dimensional coordinates ($uv.x_1$, $uv.y_1$), ($uv.x_2$, $uv.y_2$)... ($uv.x_m$, $uv.y_m$) of pixels of an image onto three-dimensional coordinates ($pos.x_1$, $pos.y_1$, $pos.z_1$), ($pos.x_2$, $pos.y_2$, $pos.z_2$)... ($pos.x_n$, $pos.y_n$, $pos.z_n$) of a three-dimensional media plane of a three-dimensional venue, such as the venue 100 as described above in FIG. 1A and FIG. 1B, and/or the venue 606 as described above in FIG. 6. For convenience, the two-dimensional coordinates ($uv.x_1$, $uv.y_1$), ($uv.x_2$, $uv.y_2$)... ($uv.x_m$, $uv.y_m$) are to be collectively referred to as two-dimensional coordinates $uv.x$, $uv.y$ and the three-dimensional coordinates ($pos.x_1$, $pos.y_1$, $pos.z_1$), ($pos.x_2$, $pos.y_2$, $pos.z_2$)... ($pos.x_n$, $pos.y_n$, $pos.z_n$) are to be collectively referred to as three-dimensional coordinates $pos.x$, $pos.y$, and $pos.z$. The operational control flow 700 can be executed by one or more computer systems, such as the image processing server 604 as described above in FIG. 6 to provide an example.

At operation 702, the operational control flow 700 projects the three-dimensional coordinates $pos.x$, $pos.y$, and $pos.z$ of the pixels of the three-dimensional media plane onto an image to effectively transform the three-dimensional coordinates $pos.x$, $pos.y$, and $pos.z$ of the pixels of the three-dimensional media plane into two-dimensional coordinates ($UV.x_1$, $UV.y_1$), ($UV.x_2$, $UV.y_2$)... ($UV.x_n$, $UV.y_n$) of two-dimensional points that are projected on the image. For convenience, the two-dimensional coordinates ($UV.x_1$, $UV.y_1$), ($UV.x_2$, $UV.y_2$)... ($UV.x_n$, $UV.y_n$) of the two-dimensional points that are projected on the image are to be collectively referred to as two-dimensional coordinates $UV.x$, $UV.y$.

At operation 704, the operational control flow 700 statistically interpolates color information, for example, luminance and/or chrominance components of YUV color model and/or red, green, and/or blue components of a RGB color model to provide some examples, of the pixels of the three-dimensional media plane from operation 702 from the image. In some embodiments, the operational control flow 700 can statistically interpolate the color information of the pixels of the three-dimensional media plane from operation 702 based upon color information of pixels of the image from operation 702. In these embodiments, the operational control flow 700 can statistically interpolate the color information of the pixels of the three-dimensional media plane from operation 702 by weighting and accumulating the color information of the pixels of the image from operation 702 that are nearby the two-dimensional points that are projected on the image from operation 702. In some embodiments, the weighting can be a distance-based weighting of the color information of the pixels of the image from operation 702 that are nearby the two-dimensional points that are projected on the image from operation 702. For example, the pixels of the image from operation 702 that are closer to the two-dimensional points that are projected on the image from operation 702 are weighted more than the pixels of the image from operation 702 that are further from the two-dimensional points that are projected on the image from operation 702. In some embodiments, if the distance between the two-dimensional points that are projected on the image from operation 702 and the nearby pixels of the image can be considered to be a random variable, the operational control flow 700 can weigh the color information of the nearby pixels of the image in accordance with a probably density function, such as a Gaussian distribution, a Normal Distribution, a Standard Normal Distribution, a Student-t Distribution, a, Chi-Square Distribution, a Continuous Uniform Distribution and/or any other well-known probably density function that will be apparent to those skilled in the relevant art(s) without departing from the spirit and scope of the present disclosure.

At operation 706, the operational control flow 700 provides the color information of the pixels to the venue for projection onto the venue in a substantially similar manner as described above in FIG. 6.

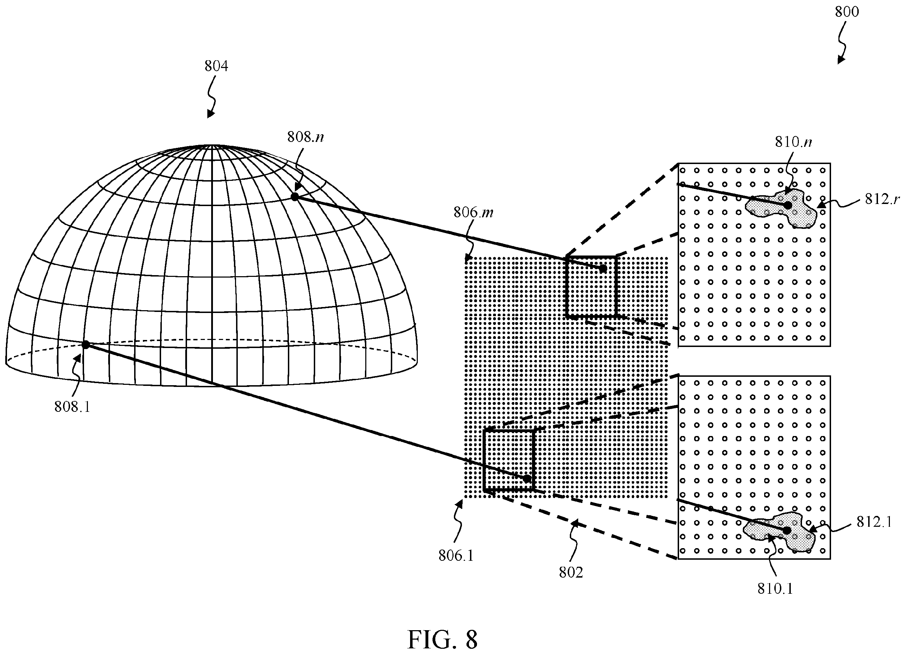

FIG. 8 illustrates the exemplary kernel-based sampling technique that can be implemented within the exemplary projection system according to some exemplary embodiments of the present disclosure. The discussion of FIG. 8 to follow is to further describe the kernel-based sampling technique as described above in FIG. 6 and/or the operational control flow 700 as described above in FIG. 7. In the exemplary embodiment illustrated in FIG. 8, a kernel-based sampling technique 800 mathematically transforms two-dimensional coordinates of an image 802 onto three-dimensional coordinates of a three-dimensional media plane of a three-dimensional venue 804. The kernel-based sampling technique 800, when executed by one or more computing devices, processors, controllers, or other electrical, mechanical, and/or electro-mechanical devices that will be apparent to those skilled in the relevant art(s), can mathematically transform two-dimensional coordinates of pixels 806.1 through 806.$m$ of the image 802 onto three-dimensional coordinates of pixels 808.1 through 808.$n$ of the three-dimensional media plane as to be described in further detail below. In some embodiments, the kernel-based sampling technique 800 can represent an exemplary embodiment of the kernel-based sampling technique as described above in FIG. 6 and/or the operational control flow 700 as described above in FIG. 7. And the three-dimensional media plane can represent an exemplary embodiment of the venue 100 as described above in FIG. 1A and FIG. 1B, and/or the three-dimensional media plane as described above in FIG. 6 and/or FIG. 7.

In the exemplary embodiment illustrated in FIG. 8, the kernel-based sampling technique 800 can mathematically transform two-dimensional coordinates $(uv.x_1, uv.y_1)$, $(uv.x_2, uv.y_2)$... $(uv.x_m, uv.y_m)$ of the image 802 into three-dimensional coordinates $(pos.x_1, pos.y_1, pos.z_1)$, $(pos.x_2, pos.y_2, pos.z_2)$... $(pos.x_n, pos.y_n, pos.z_n)$ of the three-dimensional media plane to enable the image 802 to be projected onto the three-dimensional media plane. For convenience, the two-dimensional coordinates $(uv.x_1, uv.y_1)$, $(uv.x_2, uv.y_2)$... $(uv.x_m, uv.y_m)$ are to be collectively referred to as two-dimensional coordinates $uv.x, uv.y$ and the three-dimensional coordinates $(pos.x_1, pos.y_1, pos.z_1)$, $(pos.x_2, pos.y_2, pos.z_2)$... $(pos.x_n, pos.y_n, pos.z_n)$ are to be collectively referred to as three-dimensional coordinates $pos.x, pos.y,$ and $pos.z$. As illustrated in FIG. 8, the kernel-based sampling technique 800 can project the three-dimensional coordinates $pos.x, pos.y,$ and $pos.z$ of pixels 808.1 through 808.$n$ of the three-dimensional media plane onto a two-dimensional space of the image 802 to effectively transform the three-dimensional coordinates $pos.x, pos.y,$ and $pos.z$ of the pixels 808.1 through 808.$n$ into two-dimensional coordinates $(UV.x_1, UV.y_1)$, $(UV.x_2, UV.y_2)$... $(UV.x_n, UV.y_n)$ of two-dimensional points 810.1 through 810.$n$ that are projected onto the two-dimensional space of the image 802. For convenience, the two-dimensional coordinates $(UV.x_1, UV.y_1)$, $(UV.x_2, UV.y_2)$... $(UV.x_n, UV.y_n)$ that are projected onto the two-dimensional space of the image 802 to be collectively referred to as two-dimensional coordinates $UV.x, UV.y$ that are projected onto the two-dimensional space of the image 802.

After projecting the three-dimensional coordinates $pos.x, pos.y,$ and $pos.z$ of the pixels 808.1 through 808.$n$ of the three-dimensional media plane, the kernel-based sampling technique 800 statistically interpolates color information for example, luminance and/or chrominance components of YUV color model and/or red, green, and/or blue components of a RGB color model to provide some examples, of the pixels 808.1 through 808.$n$ from the image 802. In some embodiments, the kernel-based sampling technique 800 can statistically interpolate the color information of the pixels 808.1 through 808.$n$ based upon color information of the pixels 806.1 through 806.$m$. In these embodiments, the kernel-based sampling technique 800 can statistically interpolate the color information of the pixels 808.1 through 808.$n$ by weighting and accumulating the color information of the pixels 806.1 through 806.$m$ that are nearby the two-dimensional points 810.1 through 810.$n$.

As illustrated in FIG. 8, the kernel-based sampling technique 800 can weigh the color information of the pixels 806.1 through 806.$m$ that are nearby the two-dimensional points 810.1 through 810.$n$. In some embodiments, the kernel-based sampling technique 800 can identify the pixels 806.1 through 806.$m$ that are nearby the two-dimensional points 810.1 through 810.$n$. In these embodiments, the pixels 806.1 through 806.$m$ that are nearby the two-dimensional points 810.1 through 810.$n$ can be situated within regions of interest (ROIs), also referred to as sampling kernel spaces 812.1 through 812.$r$, of the image 802. Generally, the sampling kernel spaces 812.1 through 812.$r$ can be arbitrary geometric regions within the two-dimensional space of the image 802 that include one or more pixels from among the pixels 806.1 through 806.$m$ that will be apparent to those skilled in the relevant art(s) without departing from the spirit and scope of the present disclosure. In some embodiments, the arbitrary geometric regions can include closed geometric regions, such as regular curves; such as circles or ellipses, irregular curves; regular polygons, such as equilateral triangles or squares, and/or irregular polygons, such as rectangles and/or parallelograms to provide some examples. Alternatively, or in addition to, the arbitrary geometric regions can be related to one or more mathematical functions such as an Ackley function, a Himmelblau function, a Rastrigin function, a Rosenbrock function, also known as Rosenbrock's banana function, and/or a Shekel function to provide some examples. In some embodiments, the sampling kernel spaces 812.1 through 812.$r$ can be substantially similar to one another. Alternatively, some of the sampling kernel spaces 812.1 through 812.r can differ from one another. For example, the kernel-based sampling technique 800 can utilize the one or more mathematical functions, such as the Rosenbrock function to provide an example, as the arbitrary geometric region for a first sampling kernel space from among the sampling kernel spaces 812.1 through 812.$r$ and a regular curve, such as a circle to provide an example, as the arbitrary geometric region for a second sampling kernel space from among the sampling kernel spaces 812.1 through 812.$r$. In some embodiments, the arbitrary geometric regions can be related to the three-dimensional coordinates *pos.x, pos.y,* and *pos.z* of the pixels 808.1 through 808.*n* of the three-dimensional media plane. In these embodiments, the kernel-based sampling technique 800 can utilize a first arbitrary geometric region for a first sampling kernel space when the three-dimensional coordinates *pos.x, pos.y,* and *pos.z* for it corresponding pixel from among the is near a top, or a crown, of the three-dimensional media plane and/or a second arbitrary geometric region for a second sampling kernel space when the three-dimensional coordinates *pos.x, pos.y,* and *pos.z* for it corresponding pixel from among the is near a bottom, or a springing, of the three-dimensional media plane.

After identifying the pixels 806.1 through 806.*m* within the sampling kernel spaces 812.1 through 812.*r*, the kernel-based sampling technique 800 can weigh the color information, for example, luminance and/or chrominance components of YUV color model and/or red, green, and/or blue components of a RGB color model to provide some examples, of these pixels. In some embodiments, the weighting can be a distance-based weighting of the color information of the pixels 806.1 through 806.*m* within the sampling kernel spaces 812.1 through 812.*r*. For example, the pixels 806.1 through 806.*m* within the sampling kernel spaces 812.1 through 812.*r* that are closer to the two-dimensional points 810.1 through 810.*n* are weighted more than the pixels 806.1 through 806.*m* within the sampling kernel spaces 812.1 through 812.*r* that are further from the two-dimensional points 810.1 through 810.*n*. In some embodiments, if the distances between the pixels 806.1 through 806.*m* within the sampling kernel spaces 812.1 through 812.*r* and the two-dimensional points 810.1 through 810.*n* can be considered to be a random variable, the kernel-based sampling technique 800 can weigh the color information of the pixels 806.1 through 806.*m* within the sampling kernel spaces 812.1 through 812.*r* in accordance with a probably density function, such as a Gaussian distribution, a Normal Distribution, a Standard Normal Distribution, a Student-t Distribution, a, Chi-Square Distribution, a Continuous Uniform Distribution and/or any other well-known probably density function that will be apparent to those skilled in the relevant art(s) without departing from the spirit and scope of the present disclosure.

Once the color information of the pixels 806.1 through 806.*m* within the sampling kernel spaces 812.1 through 812.*r* has been weighted, the kernel-based sampling technique 800 can accumulate the weighted color information of these pixels to statistically interpolate the color information of the pixels 808.1 through 808.*n*. In the exemplary embodiment illustrated in FIG. 8, the kernel-based sampling technique 800 can accumulate the color information of the pixels 806.1 through 806.*m* within the sampling kernel spaces 812.1 through 812.*r* that has been weighted as described above to statistically interpolate the color information of the two-dimensional points 810.1 through 810.*n*. In these embodiments, the kernel-based sampling technique 800 can associate the two-dimensional points 810.1 through *810.n* that are projected onto the two-dimensional space of the image 802 with their corresponding pixels from among the pixels 808.1 through 808.*n* of the three-dimensional media plane. Thereafter, the kernel-based sampling technique 800 can associate the color information of the two-dimensional points 810.1 through *810.n* to their corresponding pixels from among the pixels 808.1 through 808.*n* to statistically interpolate the color information of the pixels 808.1 through 808.*n*. In some embodiments, the kernel-based sampling technique 800 can generate quadruples for the pixels 808.1 through 808.*n* that include the three-dimensional coordinates *pos.x, pos.y,* and *pos.z* of the pixels 808.1 through 808.*n* and the color information for the pixels 808.1 through 808.*n* that has been statistically interpolated from the image 802.

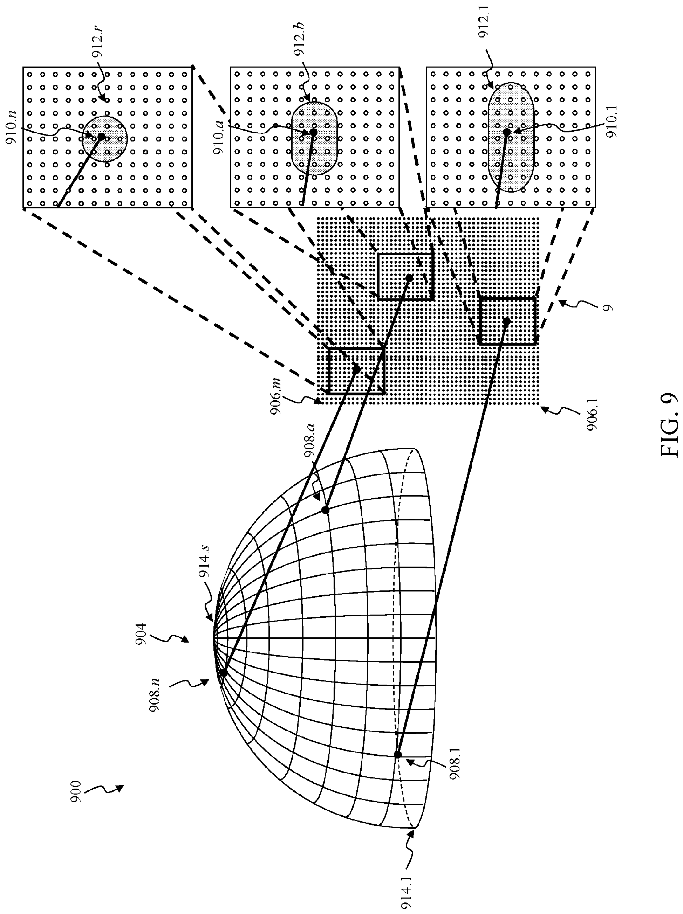

FIG. 9 illustrates the exemplary kernel-based sampling technique that can be implemented within the exemplary projection system according to some exemplary embodiments of the present disclosure. The discussion of FIG. 9 to follow is to further describe an exemplary embodiment for the sampling kernel spaces of the kernel-based sampling technique 800 as described above in FIG. 8. In the exemplary embodiment illustrated in FIG. 9, a kernel-based sampling technique 900 mathematically transforms two-dimensional coordinates of an image 902 onto three-dimensional coordinates of a three-dimensional media plane of a three-dimensional venue 904. The kernel-based sampling technique 900, when executed by one or more computing devices, processors, controllers, or other electrical, mechanical, and/or electro-mechanical devices that will be apparent to those skilled in the relevant art(s), can mathematically transform two-dimensional coordinates of pixels 906.1 through 906.*m* of the image 902 onto three-dimensional coordinates of pixels 908.1 through 908.*n* of the three-dimensional media plane as to be described in further detail below. In some embodiments, the kernel-based sampling technique 900 can represent an exemplary embodiment of the kernel-based sampling technique 800 as described above in FIG. 8. As such, the kernel-based sampling technique 900 as to be described in further detail below shares many substantially similar features with the kernel-based sampling technique 800 as described above in FIG. 8; therefore, only differences between the kernel-based sampling technique 800 and the kernel-based sampling technique 900 are to be described in further detail below.

As illustrated in FIG. 9, the kernel-based sampling technique 900 can project the three-dimensional coordinates *pos.x, pos.y,* and *pos.z* of pixels 908.1 through 908.*n* of the three-dimensional media plane onto a two-dimensional space of the image 902 to effectively transform the three-dimensional coordinates *pos.x, pos.y,* and *pos.z* of the pixels 908.1 through 908.*n* into two-dimensional coordinates *uv.x, uv.of* two-dimensional points 910.1 through 910.*n* that are projected onto the two-dimensional space of the image 902 in a substantially similar manner as the kernel-based sampling technique 800 as described above in FIG. 8.

After projecting the three-dimensional coordinates *pos.x, pos.y,* and *pos.z* of the pixels 908.1 through 908.*n*, the kernel-based sampling technique 900 statistically interpolates color information for example, luminance and/or chrominance components of YUV color model and/or red, green, and/or blue components of a RGB color model to provide some examples, of the three-dimensional media plane from the image 902 in a substantially similar manner as the kernel-based sampling technique 800 as described above in FIG. 8. However, as illustrated in FIG. 9, the pixels 906.1 through 906.$m$ that are nearby the two-dimensional points 910.1 through 910.n can be situated within regions of interest (ROIs), also referred to as sampling kernel spaces, 912.1 through 912.$r$ of the image 902. As illustrated in FIG. 9, a two-dimensional point 910.1 that corresponds to the pixel 908.1 can be situated within a sampling kernel space 912.1, a two-dimensional point 910.$a$ that corresponds to the pixel 908.$a$ can be situated within a sampling kernel space 912.$b$, and/or a two-dimensional point 910.$n$ that corresponds to the pixel 908.n can be situated within a sampling kernel space 912.$n$.

In the exemplary embodiment illustrated in FIG. 9, two-dimensional areas of the sampling kernel spaces 912.1 through 912.$r$ can be related to distances between the pixels 908.1 through 908.$n$ of the three-dimensional media plane. As illustrated in FIG. 9, the pixels 908.1 through 908.n can be situated along circles or slices 914.1 through 914.s of the three-dimensional media plane. In some embodiments, the vertical distance between adjacent slices from among the slices 914.1 through 914.s is approximately the same from the top of the three-dimensional media plane to the bottom of the three-dimensional media plane. However, the radial distance between adjacent pixels from among the same slice from among the slices 914.1 through 914.s increases from the top of the three-dimensional media plane to the bottom of the three-dimensional media plane. As such, in some embodiments, the two-dimensional areas of the sampling kernel spaces 912.1 through 912.$r$ increase from a top, or a crown, of the three-dimensional media plane toward a bottom, or a springing, of the three-dimensional media plane. In these embodiments, the two-dimensional areas of the sampling kernel spaces 912.1 through 912.$r$ are at their minimum areas at the top of the three-dimensional media plane and their maximum areas at the bottom of the three-dimensional media plane. For example, the horizontal distances of the sampling kernel spaces 912.1 through 912.$r$ increase while the vertical distances of the sampling kernel spaces 912.1 through 912.$r$ remain approximately the same from the top of the three-dimensional media plane toward the bottom of the three-dimensional media plane.

After identifying the pixels 906.1 through 906.$m$ within the sampling kernel spaces 912.1 through 912.$r$, the kernel-based sampling technique 900 can weigh the color information, for example, luminance and/or chrominance components of YUV color model and/or red, green, and/or blue components of a RGB color model to provide some examples, of these pixels in a substantially similar manner as the kernel-based sampling technique 800 as described above in FIG. 8. And once the color information of the pixels 906.1 through 906.$m$ within the sampling kernel spaces 912.1 through 912.$r$ has been weighted, the kernel-based sampling technique 900 can accumulate the weighted color information of these pixels to statistically interpolate the color information of the pixels 908.1 through 908.$n$ in a substantially similar manner as the kernel-based sampling technique 800 as described above in FIG. 8.

## EXEMPLARY COMPUTER SYSTEM THAT CAN BE IMPLEMENTED WITHIN THE EXEMPLARY IMAGE CAPTURE SYSTEM AND/OR THE EXEMPLARY IMAGE PROJECTION SYSTEM

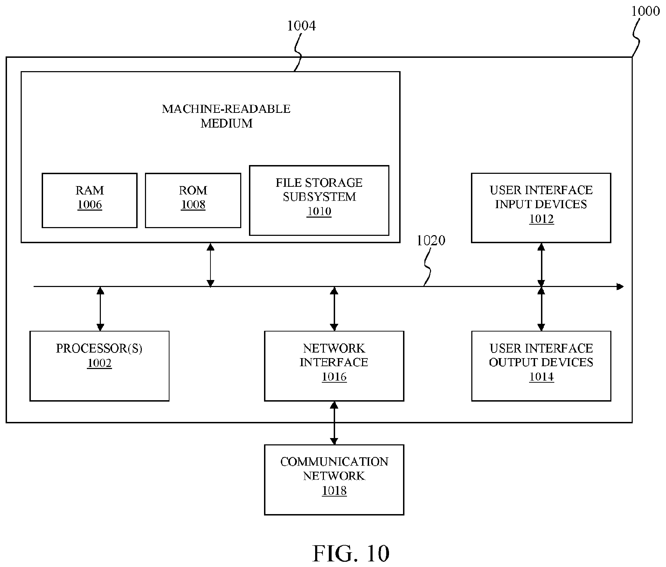

FIG. 10 illustrates a simplified block diagram of an exemplary computer system that can be implemented within the exemplary image capture system and/or the exemplary image projection system according to some exemplary embodiments of the present disclosure. The discussion of FIG. 10 to follow is to describe a computer system 1000 that can be implemented within the exemplary image capture system as described above in FIG. 2A and/or the exemplary image projection system as described above in FIG. 6.

In the exemplary embodiment illustrated in FIG. 10, the computer system 1000 includes one or more processors 1002. In some embodiments, the one or more processors 1002 can include, or can be, any of a microprocessor, graphics processing unit, or digital signal processor, and their electronic processing equivalents, such as an Application Specific Integrated Circuit ("ASIC") or Field Programmable Gate Array ("FPGA"). As used herein, the term "processor" signifies a tangible data and information processing device that physically transforms data and information, typically using a sequence transformation (also referred to as "operations"). Data and information can be physically represented by an electrical, magnetic, optical or acoustical signal that is capable of being stored, accessed, transferred, combined, compared, or otherwise manipulated by the processor. The term "processor" can signify a singular processor and multi-core systems or multi-processor arrays, including graphic processing units, digital signal processors, digital processors or combinations of these elements. The processor can be electronic, for example, comprising digital logic circuitry (for example, binary logic), or analog (for example, an operational amplifier). The processor may also operate to support performance of the relevant operations in a "cloud computing" environment or as a "software as a service" (SaaS). For example, at least some of the operations may be performed by a group of processors available at a distributed or remote system, these processors accessible via a communications network (e.g., the Internet) and via one or more software interfaces (e.g., an application program interface (API).) In some embodiments, the computer system 1000 can include an operating system, such as Microsoft's Windows, Sun Microsystems's Solaris, Apple Computer's MacOs, Linux or UNIX. In some embodiments, the computer system 1000 can also include a Basic Input/Output System (BIOS) and processor firmware. The operating system, BIOS and firmware are used by the one or more processors 1002 to control subsystems and interfaces coupled to the one or more processors 1002. In some embodiments, the one or more processors 1002 can include the Pentium and Itanium from Intel, the Opteron and Athlon from Advanced Micro Devices, and the ARM processor from ARM Holdings.

As illustrated in FIG. 10, the computer system 1000 can include a machine-readable medium 1004. In some embodiments, the machine-readable medium 1004 can further include a main random-access memory ("RAM") 1006, a read only memory ("ROM") 1008, and/or a file storage subsystem 1010. The RAM 1030 can store instructions and data during program execution and the ROM 1032 can store fixed instructions. The file storage subsystem 1010 provides persistent storage for program and data files, and may include a hard disk drive, a floppy disk drive along with associated removable media, a CD-ROM drive, an optical drive, a flash memory, or removable media cartridges.

The computer system 1000 can further include user interface input devices 1012 and user interface output devices 1014. The user interface input devices 1012 can include an alphanumeric keyboard, a keypad, pointing devices such as a mouse, trackball, touchpad, stylus, or graphics tablet, a scanner, a touchscreen incorporated into the display, audio input devices such as voice recognition systems or microphones, eye-gaze recognition, brainwave pattern recognition, and other types of input devices to provide some examples. The user interface input devices 1012 can be connected by wire or wirelessly to the computer system 1000. Generally, the user interface input devices 1012 are intended to include all possible types of devices and ways to input information into the computer system 1000. The user interface input devices 1012 typically allow a user to identify objects, icons, text and the like that appear on some types of user interface output devices, for example, a display subsystem. The user interface output devices 1020 may include a display subsystem, a printer, a fax machine, or non-visual displays such as audio output devices. The display subsystem may include a cathode ray tube (CRT), a flat-panel device such as a liquid crystal display (LCD), a projection device, or some other device for creating a visible image such as a virtual reality system. The display subsystem may also provide non-visual display such as via audio output or tactile output (e.g., vibrations) devices. Generally, the user interface output devices 1020 are intended to include all possible types of devices and ways to output information from the computer system 1000.

The computer system 1000 can further include a network interface 1016 to provide an interface to outside networks, including an interface to a communication network 1018, and is coupled via the communication network 1018 to corresponding interface devices in other computer systems or machines. The communication network 1018 may comprise many interconnected computer systems, machines and communication links. These communication links may be wired links, optical links, wireless links, or any other devices for communication of information. The communication network 1018 can be any suitable computer network, for example a wide area network such as the Internet, and/or a local area network such as Ethernet. The communication network 1018 can be wired and/or wireless, and the communication network can use encryption and decryption methods, such as is available with a virtual private network. The communication network uses one or more communications interfaces, which can receive data from, and transmit data to, other systems. Embodiments of communications interfaces typically include an Ethernet card, a modem (e.g., telephone, satellite, cable, or ISDN), (asynchronous) digital subscriber line (DSL) unit, Firewire interface, USB interface, and the like. One or more communications protocols can be used, such as HTTP, TCP/IP, RTP/RTSP, IPX and/or UDP.

As illustrated in FIG. 10, the one or more processors 1002, the machine-readable medium 1004, the user interface input devices 1012, the user interface output devices 1014, and/or the network interface 1016 can be communicatively coupled to one another using a bus subsystem 1020. Although the bus subsystem 1020 is shown schematically as a single bus, alternative embodiments of the bus subsystem may use multiple busses. For example, RAM-based main memory can communicate directly with file storage systems using Direct Memory Access ("DMA") systems.

CONCLUSION

The Detailed Description referred to accompanying figures to illustrate exemplary embodiments consistent with the disclosure. References in the disclosure to "an exemplary embodiment" indicates that the exemplary embodiment described can include a particular feature, structure, or characteristic, but every exemplary embodiment may not necessarily include the particular feature, structure, or characteristic. Moreover, such phrases are not necessarily referring to the same exemplary embodiment. Further, any feature, structure, or characteristic described in connection with an exemplary embodiment can be included, independently or in any combination, with features, structures, or characteristics of other exemplary embodiments whether or not explicitly described.

The Detailed Description is not meant to limiting. Rather, the scope of the disclosure is defined only in accordance with the following claims and their equivalents. It is to be appreciated that the Detailed Description section, and not the Abstract section, is intended to be used to interpret the claims. The Abstract section can set forth one or more, but not all exemplary embodiments, of the disclosure, and thus, are not intended to limit the disclosure and the following claims and their equivalents in any way.

The exemplary embodiments described within the disclosure have been provided for illustrative purposes and are not intended to be limiting. Other exemplary embodiments are possible, and modifications can be made to the exemplary embodiments while remaining within the spirit and scope of the disclosure. The disclosure has been described with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

Embodiments of the disclosure can be implemented in hardware, firmware, software application, or any combination thereof. Embodiments of the disclosure can also be implemented as instructions stored on a machine-readable medium, which can be read and executed by one or more processors. A machine-readable medium can include any mechanism for storing or transmitting information in a form readable by a machine (e.g., a computing circuitry). For example, a machine-readable medium can include non-transitory machine-readable mediums such as read only memory (ROM); random access memory (RAM); magnetic disk storage media; optical storage media; flash memory devices; and others. As another example, the machine-readable medium can include transitory machine-readable medium such as electrical, optical, acoustical, or other forms of propagated signals (e.g., carrier waves, infrared signals, digital signals, etc.). Further, firmware, software application, routines, instructions can be described herein as performing certain actions. However, it should be appreciated that such descriptions are merely for convenience and that such actions in fact result from computing devices, processors, controllers, or other devices executing the firmware, software application, routines, instructions, etc.

The Detailed Description of the exemplary embodiments fully revealed the general nature of the disclosure that others can, by applying knowledge of those skilled in relevant art(s), readily modify and/or adapt for various applications such exemplary embodiments, without undue experimentation, without departing from the spirit and scope of the disclosure. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

ALTERNATIVE STATEMENTS OF INVENTION

Alternative statements of invention are recited below as numbered clauses.

1. An image capture system, comprising:

a camera lens system configured to:

capture light that is related to an image within a field of view of the camera lens system,
steer a center of the camera lens system toward a periphery of an image sensor to direct the light toward the periphery of the image sensor, and
focus the light that is captured by the camera lens system to be non-uniformly distributed onto the image sensor about the periphery of the image sensor;

a camera assembly, including the image sensor, configured to capture the light that is focused onto the image sensor by the camera lens system to provide a digital image signal that is related to the image; and
an image recording system configured to store the digital image signal.

2. The image capture system of clause 1, wherein the camera lens system is configured to steer the center of the camera lens system to cause a highest optical image quality of the image, when the image is projected onto a venue, to be at to an interior of a three-dimensional media plane within the venue.

3. The image capture system of clause 1, wherein the camera lens system comprises an ultra-wide-angle lens having a field of view between approximately one hundred (100) and approximately one-hundred eighty (180) degrees.

4. The image capture system of clause 1, wherein the camera lens system comprises a perspective-control lens configured to tilt, shift, or rotate the center of the camera lens system with respect to the image sensor to steer the center of the camera lens system toward the periphery of the image sensor.

5. The image capture system of clause 1, wherein the camera lens system is configured to focus the light onto the image sensor to be more concentrated at the periphery of the image sensor as compared to a center of the image sensor.

6. The image capture system of clause 5, wherein the camera lens system is configured to concentrate the light to be a first density of pixels at the periphery of the image sensor that tapers to a second density of pixels at the center of the image sensor.

7. The image capture system of clause 1, wherein the image sensor comprises a color sensor that includes a color mask that is configured to absorb undesired color wavelengths so that each pixel of the image sensor is sensitive to a specific color wavelength.

8. A camera lens system, comprising:

a camera lens system configured to capture light that is related to an image within a field of view of the camera lens system; and
a camera lens housing configured to:

steer a center of the camera lens system toward a periphery of an image sensor of the camera assembly to direct light that is captured by a center of the camera lens system toward the periphery of the image sensor, and
focus light that is captured by the camera lens system to be non-uniformly distributed onto the image sensor about the periphery of the image sensor.

9. The camera lens system of clause 8, wherein the camera lens system is configured to steer the center of the camera lens system to cause a highest optical image quality of the image, when the image is projected onto a venue, to be at to an interior of a three-dimensional media plane within the venue.

10. The camera lens system of clause 8, wherein the camera lens system comprises an ultra-wide-angle lens having a field of view between approximately one hundred (100) and approximately one-hundred eighty (180) degrees.

11. The camera lens system of clause 10, wherein the ultra-wide-angle lens comprises a fisheye lens.

12. The camera lens system of clause 8, wherein the camera lens housing comprises a perspective-control lens configured to tilt, shift, or rotate the center of the camera lens system with respect to the image sensor to steer the center of the camera lens system toward the periphery of the image sensor.

13. The camera lens system of clause 8, wherein the camera lens housing is configured to focus the light onto the image sensor to be more concentrated near the periphery of the image sensor as compared to a center of the image sensor.

14. An image capture system, comprising:
a camera lens system configured to:

capture light that is related to an image within a field of view of the camera lens system,

steer a center of the camera lens system toward a periphery of an image sensor of the camera assembly to direct light that is captured by a center of the camera lens system toward the periphery of the image sensor, and
focus the light that is captured by the camera lens system to be non-uniformly distributed onto the image sensor about the periphery of the image sensor;

a camera assembly configured to capture the light that is focused onto the image sensor by the camera lens system to provide a digital image signal that is related to the image; and
an image recording system configured to store the digital image signal.

15. The image capture system of clause 14, wherein the camera lens system is configured to steer the center of the camera lens system to cause a highest optical image quality of the image, when the image is projected onto a venue, to be at to an interior of a three-dimensional media plane within the venue.

16. The image capture system of clause 14, wherein the camera lens system comprises an ultra-wide-angle lens having a field of view between approximately one hundred (100) and approximately one-hundred eighty (180) degrees.

17. The image capture system of clause 14, wherein the camera lens system comprises a perspective-control lens configured to tilt, shift, or rotate the center of the camera lens system with respect to the image sensor to steer the center of the camera lens system toward the periphery of the image sensor.

18. The image capture system of clause 14, wherein the camera lens system is configured to focus the light onto the image sensor to be more concentrated near the periphery of the image sensor as compared to a center of the image sensor.

19. The image capture system of clause 14, wherein the image sensor comprises a color sensor that includes a color mask that is configured to absorb undesired color wavelengths so that each pixel of the image sensor is sensitive to a specific color wavelength.

20. The image capture system of clause 14, wherein the image recording system is configured to store the digital image signal as a raw camera image file having radiometric characteristics of the light captured by the image capture system.

21. An image processing server for transforming an image for projection onto a media plane of a venue, the image processor comprising:

    a memory configured to store instructions; and
    a processor, configured to execute the instructions, the instructions, when executed by the processor, configuring the processor to:

        project three-dimensional coordinates of a plurality of pixels of the media plane onto two-dimensional coordinates of an image space of the image to provide a plurality of two-dimensional points that are projected onto the image,
        interpolate color information of the plurality of pixels of the media plane based upon color information of a plurality of pixels of the image, and
        provide the color information of the plurality of pixels to the venue to project the image onto the media plane.

22. The image processing server of clause 21, wherein the instructions, when executed by the processor, further configures the processor to reconstruct the image from one or more digital image signals that are associated with the image.

23. The image processing server of clause 21, wherein the color information of the plurality of pixels comprises luminance and chrominance components of YUV color model or red, green, and blue components of a RGB color model.

24. The image processing server of clause 21, wherein the instructions, when executed by the processor, configures the processor to interpolate color information of a pixel of the media plane from among the plurality of pixels of the media plane by weighting and accumulating the color information of the plurality of pixels of the image that are situated within a sample kernel space from among a plurality of sample kernel spaces of the image.

25. The image processing server of clause 24, wherein the instructions, when executed by the processor, configures the processor to weigh the color information of the plurality of pixels of the image that are situated within the sample kernel space in accordance with a probably density function.

26. The image processing server of clause 24, wherein the plurality of sample kernel spaces includes a first sample kernel space having a smaller two-dimensional area than a second sample kernel space, and wherein the instructions, when executed by the processor, configures the processor to weigh the color information of the plurality of pixels of the image that are situated within the first sample kernel space when the pixel of the media plane is closer to a top of the media plane or within the second sample kernel space when the pixel of the media plane is closer to a bottom of the media plane.

27. The image processing server of clause 26, wherein the first sample kernel space comprises a circle, and wherein the second sample kernel space is related to a Rosenbrock function.

28. A method for transforming an image for projection onto a media plane of a venue, the method comprising:

projecting, by a computer system, three-dimensional coordinates of a plurality of pixels of the media plane onto two-dimensional coordinates of an image space of the image to provide a plurality of two-dimensional points that are projected onto the image;
interpolating, by the computer system, color information of the plurality of pixels of the media plane based upon color information of a plurality of pixels of the image; and
providing, by the computer system, the color information of the plurality of pixels to the venue to project the image onto the media plane.

29. The method of clause 28, further comprising reconstructing, by the computer system, the image from one or more digital image signals that are associated with the image.

30. The method of clause 28, wherein the color information of the plurality of pixels comprises luminance and chrominance components of YUV color model or red, green, and blue components of a RGB color model.

31. The method of clause 28, wherein the interpolating comprises interpolating color information of a pixel of the media plane from among the plurality of pixels of the media plane by weighting and accumulating the color information of the plurality of pixels of the image that are situated within a sample kernel space from among a plurality of sample kernel spaces of the image.

32. The image processing server of clause 31, wherein the interpolating further comprises weighting the color information of the plurality of pixels of the image that are situated within the sample kernel space in accordance with a probably density function.

33. The image processing server of clause 31, wherein the plurality of sample kernel spaces includes a first sample kernel space having a smaller two-dimensional area than a second sample kernel space, and
wherein the interpolating further comprises weighting the color information of the plurality of pixels of the image that are situated within the first sample kernel space when the pixel of the media plane is closer to a top of the media plane or within the second sample kernel space when the pixel of the media plane is closer to a bottom of the media plane.

34. The image processing server of clause 33, wherein the first sample kernel space comprises a circle, and wherein the second sample kernel space is related to a Rosenbrock function.

35. An image processing system for transforming an image for projection onto a media plane of a venue, the image processor system

an image recording system configured to store one or more digital image signals that are associated with the image; and
an image processing server configured to:

reconstruct the image from the one or more digital image signals,
project three-dimensional coordinates of a plurality of pixels of the media plane onto two-dimensional coordinates of an image space of the image to provide a plurality of two-dimensional points that are projected onto the image,
interpolate color information of the plurality of pixels of the media plane based upon color information of a plurality of pixels of the image, and
provide the color information of the plurality of pixels to the venue to project the image onto the media plane.

36. The image processing system of clause 35, wherein the color information of the plurality of pixels comprises luminance and chrominance components of YUV color model or red, green, and blue components of a RGB color model.

37. The image processing system of clause 35, wherein the image processing server is configured to interpolate color information of a pixel of the media plane from among the plurality of pixels of the media plane by weighting and accumulating the color information of the plurality of pixels of the image that are situated within a sample kernel space from among a plurality of sample kernel spaces of the image.

38. The image processing system of clause 37, wherein the image processing server is configured to weigh the color information of the plurality of pixels of the image that are situated within the sample kernel space in accordance with a probably density function.

39. The image processing system of clause 37, wherein the plurality of sample kernel spaces includes a first sample kernel space having a smaller two-dimensional area than a second sample kernel space, and
wherein the image processing server is configured to weigh the color information of the plurality of pixels of the image that are situated within the first sample kernel space when the pixel of the media plane is closer to a top of the media plane or within the second sample kernel space when the pixel of the media plane is closer to a bottom of the media plane.

40. The image processing system of clause 39, wherein the first sample kernel space comprises a circle, and wherein the second sample kernel space is related to a Rosenbrock function.

**Claims**

1. An image processing server for transforming an image for projection onto a media plane of a venue, the image processor comprising:

   a memory configured to store instructions; and
   a processor, configured to execute the instructions, the instructions, when executed by the processor, configuring the processor to:

   project three-dimensional coordinates of a plurality of pixels of the media plane onto two-dimensional coordinates of an image space of the image to provide a plurality of two-dimensional points that are projected onto the image,
   interpolate color information of the plurality of pixels of the media plane based upon color information of a plurality of pixels of the image, and
   provide the color information of the plurality of pixels to the venue to project the image onto the media plane.

2. The image processing server of claim 1, wherein the instructions, when executed by the processor, further configures the processor to reconstruct the image from one or more digital image signals that are associated with the image.

3. The image processing server of claim 1, wherein the color information of the plurality of pixels comprises luminance and chrominance components of YUV color model or red, green, and blue components of a RGB color model.

4. The image processing server of claim 1, wherein the instructions, when executed by the processor, configures the processor to interpolate color information of a pixel of the media plane from among the plurality of pixels of the media plane by weighting and accumulating the color information of the plurality of pixels of the image that are situated within a sample kernel space from among a plurality of sample kernel spaces of the image.

5. The image processing server of claim 4, wherein the instructions, when executed by the processor, configures the processor to weigh the color information of the plurality of pixels of the image that are situated within the sample kernel space in accordance with a probably density function.

6. The image processing server of claim 4, wherein the plurality of sample kernel spaces includes a first sample kernel space having a smaller two-dimensional area than a second sample kernel space, and
wherein the instructions, when executed by the processor, configures the processor to weigh the color information of the plurality of pixels of the image that are situated within the first sample kernel space when the pixel of the media plane is closer to a top of the media plane or within the second sample kernel space when the pixel of the media plane is closer to a bottom of the media plane and optionally wherein the first sample kernel space comprises a circle and wherein the second sample kernel space is related to a Rosenbrock function.

7. A method for transforming an image for projection onto a media plane of a venue, the method comprising:

projecting, by a computer system, three-dimensional coordinates of a plurality of pixels of the media plane onto two-dimensional coordinates of an image space of the image to provide a plurality of two-dimensional points that are projected onto the image;

interpolating, by the computer system, color information of the plurality of pixels of the media plane based upon color information of a plurality of pixels of the image; and

providing, by the computer system, the color information of the plurality of pixels to the venue to project the image onto the media plane.

8. The method of claim 7, further comprising reconstructing, by the computer system, the image from one or more digital image signals that are associated with the image.

9. The method of claim 7, wherein the interpolating comprises interpolating color information of a pixel of the media plane from among the plurality of pixels of the media plane by weighting and accumulating the color information of the plurality of pixels of the image that are situated within a sample kernel space from among a plurality of sample kernel spaces of the image.

10. The image processing server of claim 9, wherein the interpolating further comprises weighting the color information of the plurality of pixels of the image that are situated within the sample kernel space in accordance with a probably density function.

11. The image processing server of claim 9, wherein the plurality of sample kernel spaces includes a first sample kernel space having a smaller two-dimensional area than a second sample kernel space, and

wherein the interpolating further comprises weighting the color information of the plurality of pixels of the image that are situated within the first sample kernel space when the pixel of the media plane is closer to a top of the media plane or within the second sample kernel space when the pixel of the media plane is closer to a bottom of the media plane and optionally wherein the first sample kernel space comprises a circle and wherein the second sample kernel space is related to a Rosenbrock function.

12. An image processing system for transforming an image for projection onto a media plane of a venue, the image processor system

an image recording system configured to store one or more digital image signals that are associated with the image; and

an image processing server configured to:

reconstruct the image from the one or more digital image signals,

project three-dimensional coordinates of a plurality of pixels of the media plane onto two-dimensional coordinates of an image space of the image to provide a plurality of two-dimensional points that are projected onto the image,

interpolate color information of the plurality of pixels of the media plane based upon color information of a plurality of pixels of the image, and

provide the color information of the plurality of pixels to the venue to project the image onto the media plane.

13. The image processing system of claim 12, wherein the image processing server is configured to interpolate color information of a pixel of the media plane from among the plurality of pixels of the media plane by weighting and accumulating the color information of the plurality of pixels of the image that are situated within a sample kernel space from among a plurality of sample kernel spaces of the image.

14. The image processing system of claim 13, wherein the image processing server is configured to weigh the color information of the plurality of pixels of the image that are situated within the sample kernel space in accordance with a probably density function.

15. The image processing system of claim 13, wherein the plurality of sample kernel spaces includes a first sample kernel space having a smaller two-dimensional area than a second sample kernel space, and

wherein the image processing server is configured to weigh the color information of the plurality of pixels of the image that are situated within the first sample kernel space when the pixel of the media plane is closer to a top of the media plane or within the second sample kernel space when the pixel of the media plane is closer to a bottom of the media plane and optionally wherein the first sample kernel space comprises a circle and wherein the second sample kernel space is related to a Rosenbrock function.

EP 4 626 012 A1

FIG. 1A

FIG. 1B

EP 4 626 012 A1

200

202

206

CAMERA
LENS
SYSTEM
204

IMAGE
SENSOR
212

PROCESSOR
214

COMMUNICATION
NETWORK

210

IMAGE RECORDING
SYSTEM
208

FIG. 2A

250

| STEER A CENTER OF THE CAMERA SYSTEM TOWARD A PERIPHERY OF AN IMAGE SENSOR | 252 |

| NON-UNIFORMLY DISTRIBUTE LIGHT ONTO THE IMAGE SENSOR | 254 |

FIG. 2B

FIG. 3A

EP 4 626 012 A1

FIG. 3B

FIG. 4A

FIG. 4B

FIG. 5A

FIG. 5B

EP 4 626 012 A1

600

606

604

608

COMMUNICATION NETWORK

IMAGE RECORDING SYSTEM
208

FIG. 6

700

```
┌─────────────────────────────┐
│  PROJECT THE PIXELS OF THE   │ ⟋ 702
│    VENUE ONTO THE IMAGE      │
└─────────────────────────────┘
              │
              ▼
┌─────────────────────────────┐
│     INTERPOLATE COLOR        │ ⟋ 704
│  INFORMATION FOR THE PIXELS  │
└─────────────────────────────┘
              │
              ▼
┌─────────────────────────────┐
│    PROVIDE THE COLOR TO THE  │ ⟋ 706
│ VENUE FOR PROJECTION ONTO    │
│          THE VENUE           │
└─────────────────────────────┘
```

FIG. 7

FIG. 8

FIG. 9

1004

1000

MACHINE-READABLE
MEDIUM

RAM
1006

ROM
1008

FILE STORAGE
SUBSYSTEM
1010

USER INTERFACE
INPUT DEVICES
1012

1020

PROCESSOR(S)
1002

NETWORK
INTERFACE
1016

USER INTERFACE
OUTPUT DEVICES
1014

COMMUNICATION
NETWORK
1018

FIG. 10

# EP 4 626 012 A1

Europäisches Patentamt
European Patent Office
Office européen des brevets

# EUROPEAN SEARCH REPORT

**Application Number**

EP 25 17 6817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/110069 A1 (YUAN CHANG [US]) 6 May 2010 (2010-05-06) | 1-5, 7-10, 12-14 | INV. H04N23/698 H04N23/58 |
| A | * paragraphs [0033], [0040], [0042], [0078] - [0085]; figures 3, 8A * ----- | 6,11,15 | G02B13/06 G06T3/08 H04N9/31 |
| A | US 2012/320427 A1 (ZHENG DANIAN [CN] ET AL) 20 December 2012 (2012-12-20) * paragraph [0056] * ----- | 5,10,14 | |
| A | KR 2020 0045176 A (UNIV INDUSTRY COOPERATION GROUP KYUNG HEE UNIV [KR]) 4 May 2020 (2020-05-04) * paragraph [0128] * ----- | 5,10,14 | |

| | TECHNICAL FIELDS SEARCHED (IPC) |
|---|---|
| | H04N G02B G06T |

The present search report has been drawn up for all claims

| Place of search | Date of completion of the search | Examiner |
|---|---|---|
| Munich | 18 August 2025 | Rolet, Etienne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

39

## ANNEX TO THE EUROPEAN SEARCH REPORT
## ON EUROPEAN PATENT APPLICATION NO.

EP 25 17 6817

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2025

| Patent document cited in search report | Publication date | Patent family member(s) | Publication date |
|---|---|---|---|
| US 2010110069 A1 | 06-05-2010 | NONE | |
| US 2012320427 A1 | 20-12-2012 | CN 102833460 A | 19-12-2012 |
| | | EP 2536122 A2 | 19-12-2012 |
| | | JP 6007602 B2 | 12-10-2016 |
| | | JP 2013004088 A | 07-01-2013 |
| | | KR 20120138633 A | 26-12-2012 |
| | | US 2012320427 A1 | 20-12-2012 |
| KR 20200045176 A | 04-05-2020 | NONE | |

EPO FORM P0459

For more details about this annex : see Official Journal of the European Patent Office, No. 12/82

**REFERENCES CITED IN THE DESCRIPTION**

**Patent documents cited in the description**

- US 33285523
- US 33287423

- US 63434309